# EUROPEAN PATENT SPECIFICATION

(11) **EP 4 118 974 B1**
(45) Date of publication and mention of the grant of the patent: **20.08.2025**
(21) Application number: 21185270.2
(22) Date of filing: 13.07.2021
(51) Int. Cl.: A23J 3/04, A23K 10/20, A23K 40/10

(54) **METHOD AND SYSTEM FOR PROVIDING AN INSECT-BASED, LOW-FAT PROTEIN MEAL FROM AN INSECT-BASED RAW MATERIAL**
VERFAHREN UND SYSTEM ZUR HERSTELLUNG EINER FETTARMEN PROTEINMAHLZEIT AUF INSEKTENBASIS AUS EINEM ROHSTOFF AUF INSEKTENBASIS
PROCÉDÉ ET SYSTÈME POUR FOURNIR UN REPAS À BASE D'INSECTES ET DE PROTÉINES FAIBLES EN GRAS À PARTIR D'UN ALIMENT CRU À BASE D'INSECTES

(43) Date of publication of application: 18.01.2023
(73) Proprietor: Alfa Laval Corporate AB, 221 00 Lund (SE)
(72) Inventor: REVVA, Andriy, DK-2920 CHARLOTTENLUND (DK); LINNET, Lars, DK-2100 COPENHAGEN (DK)
(74) Representative: Alfa Laval Attorneys

(56) References cited:
- WO-A1-2020/011903
- US-A1- 2020 107 560
- US-B2- 10 537 118

## Description

### TECHNICAL FIELD

The present disclosure relates to a method and system for providing an insect-based, low-fat protein meal from an insect-based raw material, as further defined in the appended claims.

### BACKGROUND

The global population is continuously growing, thereby increasing the demand for protein-based food. Studies show that by 2050 the global population reach will nearly 10 billion - an increase of 2.3 billion people. As a result, the demand for protein will increase by 50%, corresponding to more than 256 million tons per annum. At the same time, the arable land needed to produce traditional meat and plant-based proteins is limited. These are the two main challenges that require new solutions, i.e. to provide protein for growing population with reduced resources.

Insects are considered as one solution that may address these challenges. Processing of insects as an alternative protein source is a developing and highly promising area for securing sufficient protein production for the growing global population. Insects not only provide a sustainable protein source, but also help address the challenges of organic waste disposal. Additionally, insect farming contributes to the circular economy by converting food waste into protein source for animal feed and fertilizer for crops. Insects, if managed correctly, provide a sustainable source of protein to both our farmed crops and animals. The case for using insects to solve the global protein and waste challenges becomes even stronger if we consider that they are already a natural diet for many animals and an attractive feed for the fish farming, poultry and pet food industry.

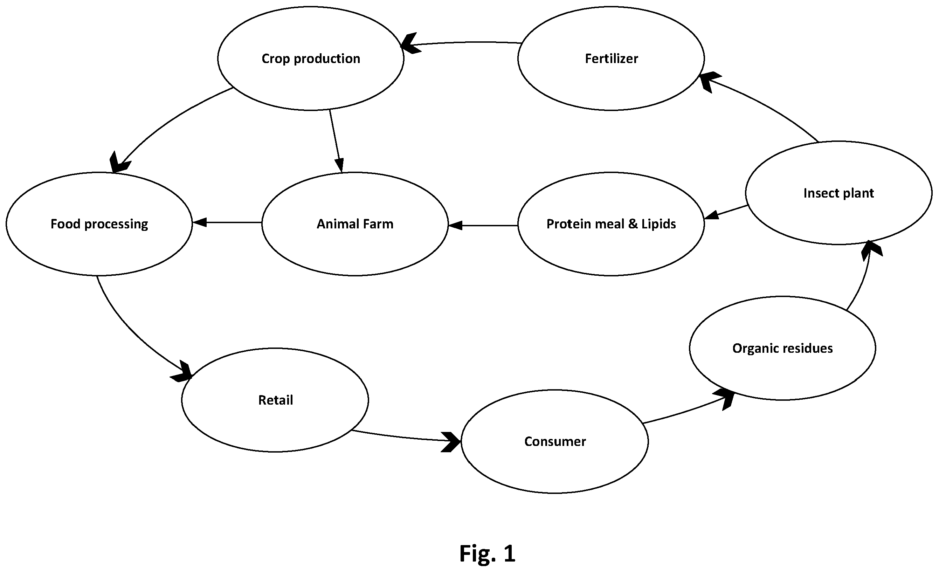

An illustration of a food production circle including insect plant as part of the circle is illustrated in Fig. 1. As it can be seen, produced crops can be used both in direct food production, or as feed in animal farms from which the yield is directed to food processing. The produced food lands on retail and from there to consumer. From consumers, organic waste disposal is obtained, which in turn can be used in insect plant. The insect plants provide protein meal and lipids which can be used as feed to the animal farms. The rest products from the insect farms can be used as fertilizers to increase the yield of crops. Insects can thus help solve the global protein and waste challenges for several reasons.

As an example, some of the advantages with black soldier fly include that its larvae food supply is flexible, since the larvae can transform a large variety of feedstock. Further, it has a very fast growth cycle, which contributes to efficient production. Additionally, its nutrient accumulation is high, providing a rich source of proteins, lipids and minerals.

Insect processing yields thus various valuable products including protein meal that can be used for pet food and fish feed, potentially for human consumption, if national legislation permits this. Further, provided insect lipids can be used for starter feed for piglets and chicks, as well as a variety of household applications. Additionally, the digested feeding material can be used as a fertilizer for gardens and crops, as well as for biogas production.

Furthermore, the larvae thrive in high density environments, making them suitable for intensive rearing. Further advantage with insect-based protein production is that insects can be produced locally and do not require the vast spaces that other protein sources - such as livestock - require for cultivation. Additionally, insect production has limited environmental impact compared to other protein production sources, such as cattle.

However, the step of producing insects to food or nutrient streams may be challenging and there have been attempts to improve the processing of insects. In some applications, enzymatic hydrolysis of the insect pulp is used before mechanical separation step, as shown e.g. by EP3398444 and EP2863762. A traditional wet rendering process without enzymatic treatment of insect pulp is shown by e.g. EP2953487. WO2020/011903 discloses a process in which the insect pulp is acidified before fractionation. However, there is still room for improvements in insect processing.

### SUMMARY

When processing insect-based raw material with the traditional wet rendering technique, it has been observed that the oil content in the dry insect protein meal is relatively high, such as over 15% oil in dry matter. It has been realized that there is a problem with high oil content in the dry matter in the insect protein meal, since it reduces the quality and functionality of the meal and makes the handling and storage of the meal more challenging. Consequently, it has been found that there is a need to reduce the oil content in the dry insect-based meal.

It is an objective of the present invention to at least partially solve the problems related to the previous methods. Thus, it is an objective to reduce the oil content in the produced insect protein meal and therefore to provide a method in which the oil content of the resulting dry, insect-based meal is reduced. Additionally, it is an objective to provide higher yield for oil derived from the insects. It is a further objective to provide an insect oil having high quality with low content of water and solids.

The inventors in the present disclosure have realized the problems with high oil-content and have discovered that the oil content in the final dry insect protein meal can be reduced by the new method and system as defined in the appended claims.

Thus, the present invention relates to a method that provides a low-fat protein meal and high-quality oil. The method comprises providing an insect-based raw material, which is optionally reduced in size. In the next step, the insect-based raw material is pumped to a heating step, in which the insect-based raw material is heated to a temperature from 75 to 100°C, preferably to a temperature from 80 to 98°C. Optionally, the heated insect-based raw material may be submitted to a buffer/mixing tank, especially in case the method is continuous. After heating, the heated insect-based raw material is subjected to one or more separation steps. Then, the solid phase and at least part of the aqueous protein-containing fraction, which is optionally concentrated, is subjected to a drying step to provide the insect-based, low-fat protein meal.

According to a first embodiment, the heated insect-based raw material is subjected to a main centrifugal separation step, in which a light liquid phase comprising a lipid fraction, a heavy liquid phase comprising an aqueous protein-containing fraction and a solid phase are separated to individual streams. In the method according to this first embodiment, at least a part of the separated heavy liquid phase is added to the provided insect-based raw material in an amount from 0.01 to 5 kg separated heavy liquid phase per 1 kg of insect-based raw material. Alternatively, the amount of heavy liquid phase may be lower, e.g. from 0.01 to 1 kg per 1 kg of insect-based raw material. The addition takes place upstream of the main separation step.

The addition may take place upstream of the heating step during pumping or downstream of pumping and/or downstream of heating, e.g. in the buffer/mixing tank. The water is preferably not added during the provision of the insect-based raw material, i.e. upstream of the pumping to the heating step. Therefore, water and/or part of the separated heavy liquid phase is added to the provided insect-based raw material upstream or downstream of the heating step. By water is in this context meant drinking water or tap water without further chemical additions and having a natural pH from 6.1 to 8.5.

By adding the part of the separated heavy liquid phase comprising the aqueous protein-containing fraction from the separation step, which may utilize a decanter centrifuge, to the insect-based raw material feed product, it is possible to provide additional "washing" of non-dissolved solids, where the water displaces and replaces the oil from the solids cell structure, releasing the oil into the liquid phase. No addition of enzymes or other chemicals is needed. By applying this technique, it is possible to release more oil from the insect-based raw material solids into the liquid phase, compared to prior art methods. By adding part of the separated liquid heavy phase, the light liquid phase is separated into an individual stream in the main centrifugal separation step, in which also the heavy liquid phase and the solid phase are separated into individual streams, and the method does not need to comprise a pre-centrifugal separation step. According to an embodiment, the method may comprise a pre-centrifugal separation step as described more in detail below. Thus, it is possible to use only one centrifugal separator step to obtain individual streams for light and heavy liquid phase and the solid phase, while obtaining two following major process improvements.

The first improvement is the increased oil (lipids) yield. Some of the oil, that has originally been bound to the solids, is released and can be further recovered.

The second improvement is the reduced oil content in the final dry insect protein meal. Since some of the oil, that has originally been bound to the solids, is released and recovered, lower amount of lipids will be remain in the processed insect-based solids. This results in lower oil content in the final dry insect protein meal, improving its protein content, quality, functionality and reduces the handling and storage challenges related to the oil content.

The advantages mentioned above are also obtained by the method according to a second embodiment of the present invention. According to the second embodiment of the present invention, which may or may not include the above-mentioned addition of water and/or part of the separated heavy liquid phase comprising an aqueous protein fraction, the method comprises separating a light liquid phase comprising a lipid fraction to an individual stream from a heavy liquid phase comprising an aqueous protein-containing fraction and a solid phase in a pre-centrifugal separation step upstream of the main centrifugal separation step.

According to a first variant of the second embodiment of the method comprising the pre-centrifugal separation step, the light liquid phase, heavy liquid phase and the solid phase are separated to individual streams in the pre-centrifugal separation step. However, the heavy liquid phase and the solid phase are recombined together to provide a slurry upstream of the main centrifugal separation step, where the heavy liquid phase and the solid phase are separated to individual streams.

By recombining the heavy liquid phase comprising the aqueous protein fraction and the solid phase from the pre-centrifugal separation step, which may be performed with a decanter centrifuge, it is possible to provide an additional "washing" of non-dissolved solids, where the aqueous protein fraction displaces and replaces the oil from the solids cell structure, releasing the oil into the aqueous protein phase.

The recombined mixture of the decanter solids and the heavy liquid phase with the aqueous protein fraction provides a slurry, which is then fed to the main centrifugal separation step for a secondary separation step. During the main separation step, which may take place in a second decanter centrifuge, the additional amount of oil, can be separated from the slurry and sent for further processing together with the oil separated during the pre-centrifugal separation step.

By applying the proposed decanter solids "washing" step, it is possible to release more oil from the insect material solids into the aqueous protein phase, compared to the traditional wet rendering process. This results in the same two major process improvements mentioned above.

According to a second variant of the second embodiment of the method comprising the pre-centrifugal separation step the light liquid phase is separated to an individual stream and the heavy liquid phase and the solid phase are separated to a slurry by using a 2-phase decanter configured for extracting a greater part of the extractable oil and/or fat originally contained in the insect-based raw material. Such decanter is herein also referred to as an oil-stripping decanter.

The oil-stripping decanter is a decanter, in which the heavy liquid phase and solids are discharged as a uniform slurry through a small end hub of the decanter, while a relative clean oil is discharged via a large end hub of the decanter. In this way the resulting product will contain a much smaller percentage of fat/oil than by using traditional 3-phase decanter. The oil-stripping decanter processes the insect based raw material and separates the light liquid phase comprising the oil (lipids) fraction from the remaining slurry. The slurry comprises insect-based raw material non-dissolved solids and aqueous protein fractions (heavy liquid phase).

By first processing the insect-based raw material in the oil stripping decanter, it is possible to remove most of the available oil and thus de-oil the insect-based raw material slurry.

As most of the available oil is removed from the insect based raw material in the oil stripping decanter, the heavy liquid phase comprising the aqueous protein fraction in the de-oiled slurry creates an additional "washing" of the non-dissolved solids. The aqueous protein fraction displaces and replaces the remaining oil from the solids cell structure, releasing additional amounts of the oil (lipids) into the aqueous protein fraction.

The slurry comprising the solid phase, i.e. non-dissolved solids, and the heavy liquid phase comprising the aqueous protein fraction from the oil stripping decanter providing the pre-centrifugal separation step is then sent into the main centrifugal separation step. In the main centrifugal separation step a second 2-phase or 3-phase decanter centrifuge can be used. During the main separation step the additional amount of oil, recovered during the above mentioned "washing" step, can be separated from the slurry and sent for further processing.

By applying the proposed processing method with the pre-centrifugal separation step, it is possible to release more oil from the insect-based raw material solids into the aqueous protein phase, compared to a traditional wet rendering process as disclosed e.g. by EP2953487. This results in the same two major process improvements as described above in connection with the first embodiment.

At least a portion of the separated heavy liquid phase comprising the aqueous protein-containing fraction may be further subjected to an additional step of centrifugal separation and/or evaporation to provide a concentrated protein fraction. In this way less material volumes need to dried and energy can be saved in a downstream drying step.

At least a portion of the separated light liquid phase may be subjected to an additional step of high-speed centrifugal separation downstream of the pre- or main centrifugal separation step to provide a purified insect oil. In this way a high-quality oil can be provided with no or low content of water and solids.

The insect-based raw material may be reduced in size at least partly during pumping to the heating step. The insect-based raw material can be reduced in size by means of squashing, cutting or milling upstream of the heating step.

The solid phase and at least part of the heavy liquid phase comprising the aqueous protein-containing fraction, which is optionally concentrated, are dried together or separately to provide the insect-based, protein-containing meal. If they are dried separately, they can be mixed after drying to provide the insect-based, protein-containing meal.

The present invention also relates to a low-fat protein-containing meal obtained by the method described above.

The present invention also relates to a system for providing a low-fat insect protein meal from the insect-based raw material.

The system comprises a receptacle configured to receive a fresh insect-based raw material, e.g. from an insect plant. The arrangement may optionally comprise, downstream of the receptacle or in connection with the receptacle, a size reduction device, such as a grinder, mincer or cutter, configured to reduce the insect-based raw material in size. Downstream of the receptacle and/or the optional size reduction device, and upstream of a heating arrangement, a first pumping arrangement, which is configured to feed the insect-based raw material to the heating arrangement, is provided. The heating arrangement is configured to heat the insect-based raw material to a temperature from 75 to 100°C, preferably to a temperature from 80 to 98°C and may be adapted for direct or indirect heating. Downstream of the heating arrangement, a buffer/mixing tank configured to receive the heated insect-based raw material may be provided. Downstream of the heating arrangement, a second pumping arrangement, which is configured to feed the heated insect-based raw material to a downstream centrifugal separator is provided.

According to a first embodiment of the system, the second pumping arrangement is configured to feed the heated insect-based raw material to a main centrifugal separator. In the main centrifugal separator, a light liquid phase comprising a lipid fraction, a heavy liquid phase comprising an aqueous protein-containing fraction and a solid phase are separated to individual streams.

Downstream of the main centrifugal separator, a dryer configured to dry the solid phase and at least part of the heavy liquid phase comprising the aqueous protein-containing fraction is provided. Further, upstream of the dryer, optionally an evaporator configured to provide a concentrated aqueous protein-containing fraction is provided. Alternatively a further centrifugal separator may be provided. Further, the system comprises a fluid addition arrangement for adding water and/or a part of the separated heavy liquid phase to the insect-based raw material upstream or downstream of the heating arrangement and upstream of the main centrifugal separator, in an amount from 0.01 to 5 kg water per 1 kg of insect-based raw material.

According to a second embodiment of the system, the second pumping arrangement is configured to feed the heated insect-based raw material to a pre-centrifugal separator, in which a light liquid phase comprising a lipid fraction is separated to an individual stream from a heavy liquid phase comprising an aqueous protein-containing fraction and a solid phase. Downstream of the pre-centrifugal separator, a main centrifugal separator in which main centrifugal separation step the heavy liquid phase and solid phase are separated to individual streams. Downstream of the main centrifugal separator, a dryer configured to dry the solid phase and at least part of the heavy liquid phase comprising the aqueous protein-containing fraction is provided. Further, upstream of the dryer and downstream of the main centrifugal separator, optionally an evaporator configured to provide a concentrated aqueous protein-containing fraction is provided. Alternatively, a further centrifugal separator can be provided.

The pre-centrifugal separator may be a 2-phase decanter configured for extracting a greater part of the extractable oil and/or fat originally contained in the insect-based raw material, i.e. a so-called oil-stripping decanter. Alternatively, the pre-centrifugal separator may be a 3-phase decanter. The main centrifugal separator may be a 2- or 3-phase decanter.

The system may comprise downstream of the main centrifugal separator a high-speed centrifugal separator adapted for purifying the light liquid phase and/or a high-speed centrifugal separator adapted for purifying the heavy liquid phase.

The heating arrangement may comprise a heat exchanger, direct steam injecting device and/or indirect heating device using steam or liquid heating medium.

The evaporator may comprise a plate or shell and tube single or multiple effect evaporation system, configured to be driven by a mechanical vapour re-compressor, or thermal vapour re-compressor, or direct steam, or liquid heating medium.

Further aspects of the invention are apparent from the dependent claims and the description.

### BRIEF DESCRIPTION OF THE DRAWINGS

Further objects, features and advantages will appear from the following detailed description of several embodiments of the invention with reference to the drawings, in which:
Fig. 1 is an illustration of a food production circle including insect plant as part of the circle.
Fig. 2 illustrates a flow chart of the method according to a first embodiment of the present disclosure.
Fig. 3 illustrates schematically a flow chart of the system according to a first embodiment of the present disclosure.
Fig. 4 shows schematically a partially cut view of an example decanter centrifugal separator.
Fig. 5 shows schematically a cut view of an end portion of an example decanter centrifugal separator.
Fig. 6 shows schematically an example of a high-speed separator.
Fig. 7 illustrates a flow chart of the method according to a first variant of the second embodiment of the present disclosure.
Fig. 8 illustrates schematically a flow chart of the system according to the first variant of the second embodiment of the present disclosure downstream of the second pumping arrangement.
Fig. 9 illustrates a flow chart of the method according to a second variant of the second embodiment of the present disclosure.
Fig. 10 illustrates schematically a flow chart of the system according to a second variant of the second embodiment of the present disclosure downstream of the second pumping arrangement.

### DETAILED DESCRIPTION

The objective of this invention is to provide an effective method for processing various insect species for the purpose of extracting insect oil (or lipid fraction) from the insects and production of low-fat insect protein meal. The method according to the invention converts fresh insects or worms into nutrient streams and to a final product of low-fat insect protein meal.

The term "insects" refers to insects in any development stage, such as adult insects, insect larvae and insect pupae, for example insect larvae or worms can be used in the process. Insect larvae may contain substantial amounts of chitine which is usually difficult to separate completely from the other ingredients such as fat fraction. However, according to the present method, it has been discovered that improved fat fraction separation is obtained. The proposed processing method is suitable for both industrial (feed grade) and food grade raw material.

A large variety of insects and worms can be used in the present method, such as edible insects or edible worms. The insects can be flies, bugs, mosquitos, butterflies, moths, cicadas, termites, bees, ants, wasps, beetles, grasshoppers, or crickets. The insects may belong to the species: black soldier fly, house fly, morio worm, mealworm or cricket. The insects and worms may be cultivated, e.g. in an insect farm. The cultivation allows to control and reduces the risks associated with diseases of insects and with the toxicity of insect-derived foodstuffs, e.g. due to the presence insecticides, in contrast to insects harvested in the nature.

The insect-based raw material may consist of one of more insect species.

Fig. 1 illustrates an example of a food production circle, which includes insect plant as a part of the circle. As can be seen, the insect-based raw material from an insect plant can be used as a fertilizer for crop-production, or it can be used as protein meal and lipids for animal farms. The crops produced may also be used in animal farms. The produced crops and animal protein from farms can then be used in food processing. The food is provided to retail and from retail to consumers, which produce organic residues usable as feed to insects. Therefore, the use of insects is advantageous in the food production.

The liquid phases and solids can be separated from each other by using centrifugal separators, which include decanters and disc stack separators, also referred to as centrifuges and/or high-speed separators. In the present method and system, both decanters and disc stack separators can be used in different stages of the process to achieve the required separation result. Centrifugal separation is advantageous if compared to e.g. filtration by pressing for example because the separation process is faster, it allows for more efficient separation of solids and liquids as it uses centrifugal force, rather than pressing the product through openings in the filter and it can be cleaned by CIP (Clean In Place) whereas the filters can normally not.

A decanter centrifuge separates solids from one or two liquid phases in one single continuous process, and the decanter may be a so-called two-phase (2-phase) or three-phase (3-phase) decanter. The separation is performed by utilizing centrifugal forces that can be beyond 3000 times greater than gravity. When the material to be separated is subjected to such forces, the denser solid particles are pressed outwards against a rotating bowl wall, while the less dense liquid phase forms a concentric inner layer along a longitudinally extending central rotating screw conveyor inside the rotating bowl. Different dam or weir plates are used at the outlets to vary the depth of the liquid, the pond, as required. A sediment formed by the solid particles is continuously removed by the screw conveyor inside a decanter bowl, and the screw conveyor is arranged to rotate at a different speed than the bowl. As a result, the solids are gradually "ploughed" out of the pond and up a conical "beach". The centrifugal forces compact the solids and expels the surplus liquid. The dried solids are then discharged from the bowl. The clarified liquid phase or phases overflow the dam plates situated at the outlet on the opposite end of the bowl. Baffles within the centrifuge casing direct the separated phases into the correct flow path and prevent any risk of cross-contamination. The speed of the screw conveyor may be automatically adjusted by the use of a variable frequency drive (VFD) in order to adjust to a variation in the solids load. Decanter centrifuges can be used to remove large particles from slurries or liquids with a high concentration of solids and it is also possible to separate two liquid phases of varying densities. Decanters may have a separation range suitable for liquids containing more than 15% by weight solids. The particle size may be equal to or greater than 10 micron.

Disk stack separators, also referred to as high-speed separators, use centrifugal force to separate slurries normally having a lower concentration of solids than slurries separated by decanters and having relatively small particle sizes. Disk stack separators are highly suitable for separating two liquid phases as well as a solids phase, and can be thus configured as three-phase separators, or two-phase separators. Disc stack centrifuges may be used for liquids with solid contents for example below 25% by weight. The particle sizes can be between 0.1 micron (µm) and 150 micron. High-speed centrifugal separators of a disc stack centrifuge type are suitable for separating two liquid phases as well as a solids phase and the separation technology is based on different densities of the liquid/solid phases.

The high-speed or disc stack separators use mechanical forces to separate liquids and solids with different densities from each other. Rapid rotation of a separator bowl provides a centrifugal force, or gravitational force known as G-force, which can have an effect up to 10.000 times greater than the force of gravity. G-force is then used to separate liquids from other liquids and solids efficiently with accuracy and speed and in a manner that is easy to control. A disc stack within the bowl contributes to higher separation efficiency by increasing the separation area in the separator bowl. The solids that concentrate at the outer edge of the bowl are removed - either continuously, intermittently or manually, depending on the volume of solids involved in the specific application.

There are basically three types of disc stack separators: a clarifier, purifier and concentrator. A clarifier is a centrifugal separator which may be used for solid/liquid separation, in which solids such as particles, sediments, oil, natural organic matter and colour are separated from process liquids. A clear process liquid can be provided by a clarifier. A purifier is a centrifugal separator for liquid - liquid - solid separation, in which two liquids of different densities and solids can be separated from each other. For example, water, oil, and fines can be separated from each other. Using a purifier the light liquid phase is typically the large fraction which is meant to cleaned. A concentrator is a centrifugal separator designed to separate three different phases, one solid phase and two liquid phases of different densities, and clean the densest/heaviest liquid phase.

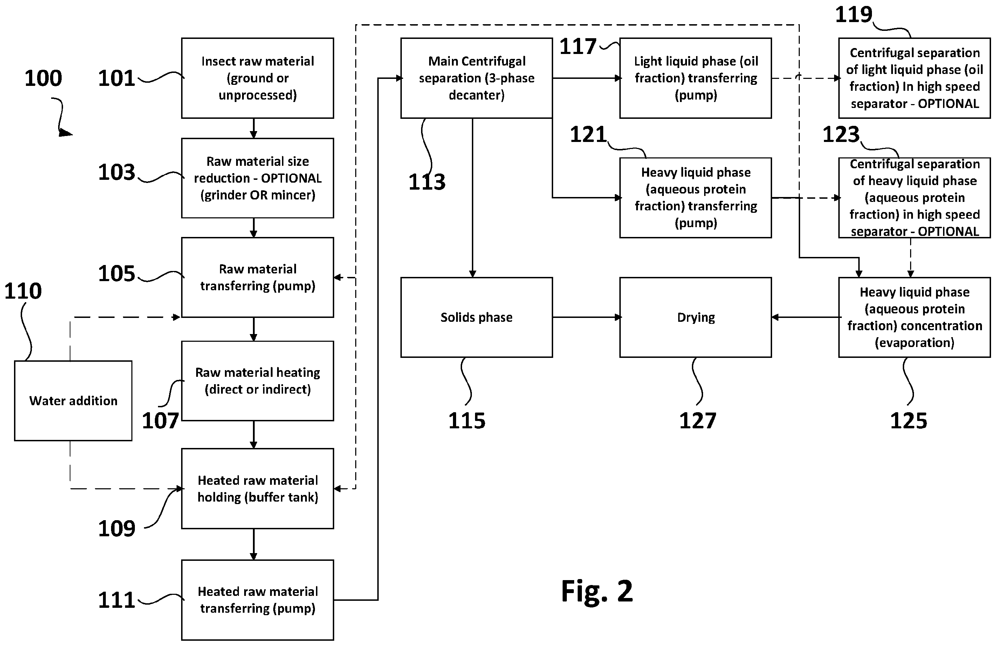

Embodiments and variants of a method according to the present disclosure are illustrated in flow charts in Fig. 2, 7 and 9. By the method an insect-based, low-fat protein meal can be provided. The method may be configured to be continuous or discontinuous. The method is suitably arranged as a continuous method, which is advantageous when handling fresh insects.

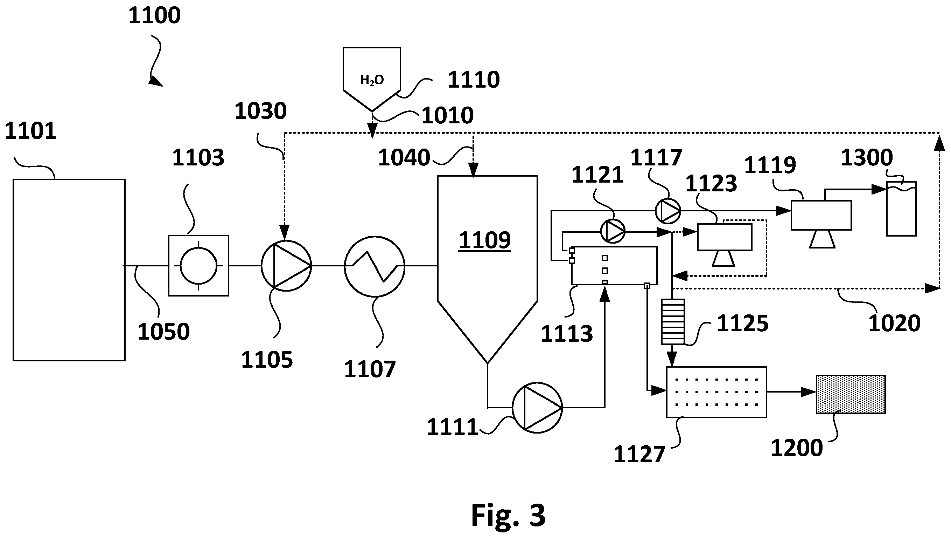

Fig. 3, 8 and 10 illustrate schematically embodiments of a system suitable for implementing the embodiments of the method.

Reference is now made to each of Fig. 2, 7 and 9, in which variants 100, 700 and 900 of the method are illustrated. In each of the methods, fresh insect-based raw material is provided in the step 101. The insect-based raw material may comprise or consist of unprocessed, living or dead insects of the type described above.

By "fresh insects" is meant that the insects are in a natural condition rather than artificially preserved by e.g. freezing. Further, the insects are unprocessed and are not pre-treated with enzymes or other chemicals before pumping to a heating step. The insects may be however scalded or killed by e.g. electrical current just before pumping to the heating step.

The insects may be reduced in size in step 103 before heating. The size reduction may occur during pumping in the step 105. For example, if insects without hard shells, such as worms or larvae, are used as the raw material, a pump may be sufficient to reduce the size of the insects and provide an insect pulp. Alternatively, the pump may comprise means, e.g. a grinding or cutting head, that are configured to reduce the insects in size to provide an insect pulp. The pump may be of any suitable type, for example a centrifugal pump or positive displacement pump, but the type is not limited thereto. Alternatively, or additionally, the insects may be reduced in size in a separate step 103, e.g. by means of squashing, grinding or cutting, i.e. by mechanically treating the insects so as to reduce the size thereof and thus provide an insect pulp. For example, a grinder, cutter or mincer can be used.

When the insects are reduced in size either during the pumping or the mechanical treatment, the insects are crushed to a pulp, and may be divided into fine particles in the insect pulp. The particle size of the insects in the pulp, when determined by a microscope, may be from 0.01 to 1 mm. According to the present method also small particle sizes creating an emulsion can be handled effectively to separate the fat.

The desired particle size can be obtained by controlling the selection of a specific tool combination and e.g. rotating speed of a cutter. For example, a single or double rotating knife can be used in combination with a sieve mesh of at least 4 mm, or around 6 mm. The rotating speed could vary between 50 and 3000 rpm. The advantage with a small particle size is that it may facilitate fat extraction.

After, or simultaneously with, the size reduction, the insect-based raw material is transferred in the step 105 by pumping to a heating step 107, in which the insect-based raw material is heated to a temperature from 75 to 100°C or from 80 to 98°C. The lowest heating temperature of 75°C ensures that lipids in the form of fats are sufficiently liquefied. At temperatures above 100°C, from the process point of view, there is a risk that proteins are damaged, and the final protein meal is deteriorated. From the equipment point of view, at temperatures above 100°C, more water vapor will be generated, which in turn creates potential challenges with overheating and e.g. washing out of grease from the decanter centrifuge bearings. By the heating, the main part of the fats is liquefied, which facilitates separation of liquid phases, i.e. an oily phase and aqueous phase, with different densities in the downstream separation steps. During the heating the insect raw material may be mixed. The heating time is dependent on the raw material and can be for example 0.1-4 hours, for example 5-10 min, but is not limited thereto. The heating can be performed gradually. The heating can be performed by indirect or direct methods, e.g. by using steam or other heating medias or fluids such as hot water or hot oil or microwave or ohmic heating can be used to heat the insect material.

In a continuous process, it is advantageous if the heated insect pulp is brought to a buffer/mixing tank in a step 109 downstream of the heating step 107 and upstream of a separation step 113. In this way, the heated insect pulp can be pumped in step 111 continuously to a main centrifugal separation in step 113. Thus, from the heating step 107, directly or via transfer to the buffer/mixing tank 109, the heated insect-based raw material is pumped in a pumping step 111 to the main centrifugal separation step.

Reference is now made specifically to Fig. 2, in which a first embodiment of the present method is further illustrated. In Fig. 2, the heated insect-based raw material is pumped to a main centrifugal separation step 113, which in the embodiment shown in Fig. 2 comprises separating the heated insect-based raw material into a light liquid phase, i.e. a lipid fraction, a heavy liquid phase, i.e. an aqueous protein-containing fraction and a solid fraction. The main centrifugal separation step 113 may include decanting as the centrifugal separation step. In the present method pressing of the pulp is not used. The centrifugal separation is a more effective way to separate the heated insect-based material, which is in the form of a pulp, into different phases.

In the present method the light phase (light liquid phase), i.e. a lipid or fat/oil fraction, can be separated from the aqueous heavy phase and a solid-containing fraction, also referred to as sludge. The separation may be done in a decanter, which is a centrifugal separator. The light phase comprising the lipids, the heavy phase (heavy liquid phase) containing the aqueous protein fraction and solid-containing fractions can be obtained for example by using a 3-phase or a 2-phase decanter. By using a 3-phase decanter separator, the three fractions can be obtained by using one step, which is particularly advantageous when used in a continuous process. By using a 2- phase decanter, it is possible to separate the light liquid phase from a slurry comprising the heavy liquid phase and the solids.

In the embodiment shown in Fig. 2, the two liquid phases, heavy and light liquid phases, and the solids are separated to individual streams in one, main centrifugal separation step 113 by using a 3-phase decanter. The light liquid phase or oil fraction may be transferred by pumping in step 117 to a further, optional, second centrifugal separation step 119 to remove any remaining solids and/or aqueous heavy phase. The centrifugal separator in the step 119 may be a high-speed separator and can be of a purifier type. In a corresponding manner, the heavy liquid phase may be transferred by pumping in step 121 to a further, optional, third centrifugal separation step 123 to remove any remaining solids or light liquid phase.

By performing further separation of the liquid phases, more pure liquid phases as nutrient streams may be provided. By nutrients streams in the present disclosure are understood the separated liquid phases which contain nutrients, such as fats, protein and protein-derived material, carbohydrates, minerals and/or chitin. In the present description, chitin is also considered a nutrient. In this way material losses can be minimized.

According to the first embodiment of the present invention as shown in Fig. 2, water and/or part of the separated aqueous protein-containing fraction is added in a step 110 to the insect based raw material upstream or downstream of the heating step 107, and upstream of the main separation step 113. The water may be added to a material which has been reduced in size in the step 103, e.g. during pumping in the step 105 as shown in Fig. 2. Alternatively, or additionally, water can be added to the heated material for example when it is held in the buffer tank in the step 109. It has been surprisingly noted that by adding water and/or part of the separated aqueous protein-containing fraction in a step 110 to the insect-based raw material upstream or downstream of the heating step 107 decreases the fat content of a final protein meal obtained after a drying step 127. Further, the yield of insect oil can be increased.

The water is suitably fresh water or drinking water, such as tap water. The water may have a natural pH from 6.1 to 8.5. By natural pH is meant that no acid or base is added to the water to adjust the pH. The water and/or part of the separated aqueous protein-containing fraction is added in an amount from 0.01 to 5 kg water per 1 kg of insect-based raw material. Alternatively, or additionally, the heavy aqueous phase separated in the step 113 may be recirculated back to the insect raw material upstream and/or downstream of the heating step. In an embodiment, the heavy aqueous phase from the step 113 partly or completely replaces the water addition in step 110, wherein the recirculated heavy phase corresponds to the water. In this way, at least partly closed loop in the method can be provided. The water or heavy phase addition provides for additional "washing" of the non-dissolved solids, where the water displaces and replaces the oil from the solids cell structure, releasing the oil into the liquid phase. By applying this so-called pre-washing technique, it is possible to release more oil from the insect-based raw material solids into the liquid phase, compared to the traditional wet rendering process described above.

In all embodiments 100, 700 and 900, as shown in Fig. 2, 7 and 9, the solids phase obtained in the step 115 is further transferred to a drying step 127. The heavy liquid phase containing the aqueous protein fraction is transferred by pumping in the step 121 to an evaporation step 125, in which water in the heavy liquid phase containing the aqueous protein fraction is evaporated. The evaporated heavy liquid phase containing the aqueous protein fraction is then transferred to the drying step 127 together with the solid phase.

The evaporator may comprise a plate or shell and tube single or multiple effect evaporation system, configured to be driven by a mechanical vapour re-compressor, or thermal vapour re-compressor, or direct steam, or liquid heating medium. Subjecting the solid fraction and at least part of the aqueous protein-containing fraction, which is optionally concentrated, to a drying step together or separately, provides the insect-based, low-fat protein meal according to the present invention.

Drying in the step 127 can be performed by different methods, such as air drying, drum drying, disc drying, flash drying. The solid-containing fraction can alternatively be dried separately by e.g. drum drying, although flash drying or other methods are also possible.

The method according to the invention does not comprise enzymatic or acidic pH-adjusting treatment of the insect-based raw material upstream of the separation steps. No chemical addition needs to be included upstream of the heating step and/or downstream of the heating step. In this way, the presented method does not require costly materials, such as enzymes, and is simple and economic in practice.

As mentioned above, by adding the water or aqueous protein fraction from the decanter centrifuge in the insect based raw material feed product, it is possible to provide additional "washing" of the non-dissolved solids, where the water displaces and replaces the oil from the solids cell structure, releasing the oil into the liquid phase. It has been noted that applying this step is applicable in the processing of insects, whereby it is possible to release more oil from the insect-based raw material solids into the liquid phase, compared to the traditional wet rendering process. This results in major process improvements.

One surprising improvement is the increased fat/oil (lipids) yield from the insects. It has been noted that some of the fat/oil, that has originally been bound to the solids, is released by the water addition step upstream and/or downstream of the heating step and can be further recovered by the downstream process steps. The light phase, i.e. the fat/oil fraction mainly contains insect lipid. By mainly contains lipid is meant that based on the dry weight, the separated light liquid phase contains more fat/oil on a weight basis than any other component. The heavy liquid phase from 3-phase decanter - or from high-speed centrifuge - contains soluble proteins from feedstock.

A further essential improvement with the present invention is the reduced oil (lipids) content in the final dry insect protein meal. Since some of the oil (lipids), that has originally been bound to the solids, is released and recovered, lower amount of lipids will be present in the insect-based solid fraction. This results in lower oil (lipids) content in the final dry insect protein meal, improving its protein content, quality, functionality and reduces the handling and storage challenges related to the oil (lipids) content.

Fig. 3 schematically illustrates a system 1100 suitable for use in the method according to a first embodiment as described above. The system shown depicts an embodiment suitable for continuously providing an insect-based, protein-containing meal 1200 from the insect-based raw material received in a receptacle 1101. The receptacle is configured to receive fresh insect-based raw material from an insect plant, and may include necessary equipment to receive the material, such as sieves, conveyors etc. The process line, which comprises necessary pipes, valves and fittings in a known manner is depicted with reference number 1050. Downstream of the receptacle or in connection with the receptacle, a size reduction device 1103, such as a grinder, mincer or cutter, configured to reduce the insect-based raw material in size, is included. Downstream of the size reduction device 1103 and upstream of a heating arrangement 1107, a first pumping arrangement 1105 configured to feed the insect-based raw material to the heating arrangement is included. The heating arrangement 1107 may be configured for direct or indirect heating of the insect-based raw material to a temperature from 75 to 100°C. Downstream of the heating arrangement 1107, a buffer/mixing tank 1109 configured to receive the heated insect-based raw material may be arranged. In some embodiments, e.g. in case of batch production, the tank 1109 may be omitted. The tank may be of any known type, which is suitable for food industry and may include a mixer. Downstream of the heating arrangement 1107 and the buffer/mixing tank 1109 a second pumping arrangement 1111 configured to feed the heated insect-based raw material either from the heater 1107 or from the buffer/mixing tank 1109 to a main centrifugal separator 1113 is arranged.

The main centrifugal separator 1113 may be a three-phase decanter separator comprising inlet holes and liquid outlets and a solid outlet. The centrifugal separator is configured to separate the heated insect-based raw material into a light liquid phase comprising a lipid fraction, a heavy liquid phase comprising an aqueous protein-containing fraction and a solid fraction. Downstream of the first separator, a dryer 1127 configured to dry the solid fraction and at least part of the aqueous protein-containing fraction is arranged. Downstream of the main separator 1121, the heavy liquid phase containing the aqueous protein fraction may be submitted to an evaporator 1125 to concentrate the heavy phase before it is fed to the dryer 1127 together with the solids. Upstream of the evaporator 1125 and downstream of the main separator 1113, a second, heavy phase centrifugal disc stack separator 1123 may be provided to purify the heavy phase before entering the evaporator 1127. The evaporator 1125 and further centrifugal separator 1123 are configured to provide a concentrated aqueous protein-containing fraction. When the concentrated heavy phase and the solids are dried in the dryer 1127, a low fat protein containing insect meal 1200 is provided as a product.

Downstream of the main centrifugal separator 1113, a third, light phase centrifugal separator 1119 configured to remove any remaining water or solids from the light liquid phase may be arranged. The light liquid phase from the first separator 1113 is supplied to the light phase centrifugal separator by means of a pump 1117. The centrifugal separator 1119 is configured to provide a high-quality insect oil 1300 with no or very little heavy phase or solids present.

According to the present invention an aqueous liquid addition arrangement 1110 configured to add water having pH from 6.1 to 8.5 is arranged to supply water to the pumping arrangement comprising the pump 1105 adapted to pump the insect based raw material further to the heater 1107. The water can be added via a supply line 1030 to the pump 1105 or via a supply line 1040 to the tank 1109. At least a part of the separated heavy liquid phase comprising the aqueous protein-containing fraction is recirculated via a recirculation line 1020 to the insect based raw material via the supply line 1030 or to the tank 1109 via the supply line 1040. **The** recirculation line 1020 may comprise a pump (not shown). **The** water and/or the separated heavy liquid phase may be added in an amount from 0.01 to 5 kg water per 1 kg of insect-based raw material.

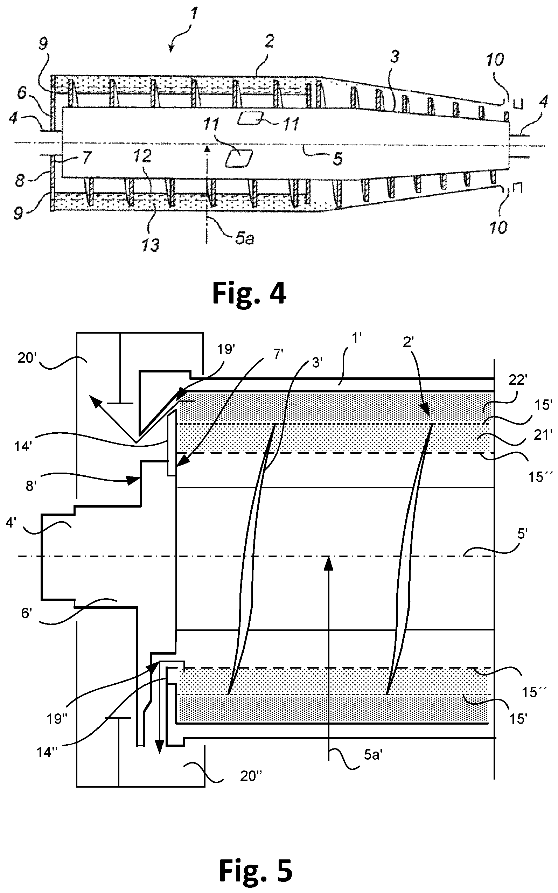

Fig. 4 illustrates an example of a known decanter disclosed by WO2008138345 comprising comprising a bowl 2 and a screw conveyor 3 which are mounted on a shaft 4 such that they in use can be brought to rotate around a horizontal axis 5 of rotation. **The** decanter is in this example configured as a 2-phase decanter. The axis 5 of rotation extends in a longitudinal direction of the bowl 2. Further, the rotating body 1 has a radial direction 5a extending perpendicular to the longitudinal direction. For the sake of simplicity directions "up" and "down" are used 5 herein as referring to a radial direction towards the axis 5 of rotation and away from the axis 5 of rotation, respectively. The bowl 2 comprises a base plate 6 provided at one longitudinal end of the bowl 2, which base plate 6 has an internal side 7 and an external side 8. This end is also referred to as a large end hub. The base plate 6 is provided with a number of liquid phase outlet passages 9 having external openings in the external side 8 of the base plate. Further, the bowl 2 is at an end opposite to the base plate 6 provided with solid phase discharge openings 10. This end is also referred to as a small end hub. The screw conveyor 3 comprises inlet openings 11 for feeding a feed slurry to the rotating body 1. The slurry comprises a light, liquid phase 12 and a heavy, solid phase 13. During rotation of the rotating body 1, separation of the liquid phase 12 and solid phase 13 are obtained. The liquid phase 12 is located radially closer to the rotation axis than the heavier solid phase 13, and the liquid phase is discharged through the outlet passages 9 in the base plate 6, while the screw conveyor 3 transports the solid phase 13 towards the solid phase discharge openings 10 through which the solid phase 13 is eventually discharged. Each liquid phase outlet passage 9 may be partly covered by a weir or dam plate 14, as shown in Fig. 4. The weir plate 14 determines a level 15 of the liquid in the bowl.

A 2-phase decanter shown in Fig. 2 may be adapted for extracting a greater part of the extractable oil and/or fat originally contained in an insect-based raw material. Such decanter is herein referred to as an oil-stripping decanter. In such decanter, the heavy liquid phase and solids are discharged as a uniform slurry through the small end hub of the decanter, while the relative clean oil is discharged via the large end hub of the decanter.

Furthermore, centrifugal decanter separators adapted for separation of two liquid phases and a solid phase, i.e. 3-phase decanters, are known for example from WO2009127212. Reference is made to Fig. 5, which shows an example of a prior art centrifugal separator or decanter centrifuge schematically, which is adapted to separating two liquid phases, but the solid phase separation works in a similar way as in Fig. 4.

The centrifugal decanter separator comprises a rotating body 1' comprising a bowl 2' and a screw 25 conveyor 3' which are mounted on a shaft 4' such that they in use can be brought to rotate around a horizontal axis 5' of rotation. The axis 5' of rotation extends in a longitudinal direction of the bowl 2'. Further, the rotating body 1' has a radial direction 5a' extending perpendicular to the longitudinal direction. The bowl 2' comprises a base plate 6' provided at one longitudinal end of the bowl 2', which base plate 6' has an internal side 7' and an external 30 side 8'. The base plate 6' is provided with a number of heavy liquid phase outlet passages 19' and a number of light liquid phase outlet passages 19". The bowl is at an end opposite to the base plate provided with solid phase discharge openings (not shown) in a similar manner as in the variant shown in Fig. 3. As in Fig. 3, the screw conveyor 3' comprises inlet openings (not shown) for feeding a feed slurry to the rotating body 1'. The slurry comprises a solid phase (not shown), light liquid phase 21' and a heavy liquid phase 22'. During rotation of the rotating body 1', separation of the liquid phases 21' and 22' and the solids are obtained. The light liquid phase 21' is located radially closer to the rotation axis 5' than the heavier liquid phase 22'. The light liquid phase 21' is discharged through the outlet passages 19" in the base plate 6 to an outlet chamber 20", the heavy liquid phase 22' is discharged through outlet passages 19' to an outlet chamber 20', while the screw conveyor 3' transports the solid phase towards the solid phase discharge openings at the opposite end of the separator as described in connection with Fig. 4. Each liquid phase outlet passage 19' and 19" is partly covered by a respective heavy phase weir or dam plate 14' and a light phase weir plate 14". The respective weir plates 14' and 14" determine a respective heavy phase level 15' and a light phase level 15" in the bowl, whereby it is possible to discharge respective 15 liquid phases.

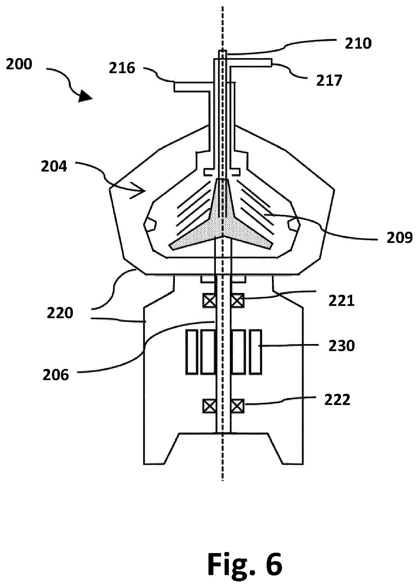

The high-speed separator used in the optional centrifugal separator steps may be a disc stack centrifuge of the type as shown in Fig. 6, which schematically illustrates a disc stack separator 200 configured to separate a heavy phase and a light phase from a liquid feed mixture. The centrifugal separator 100 has a rotating part comprising a centrifuge rotor, i.e. a centrifuge bowl, 204 and drive spindle 206.

The centrifugal separator 200 is further provided with a drive motor 230. This motor 230 may for example comprise a stationary element and a rotatable element, which rotatable element surrounds and is connected to the spindle 206 such that it transmits driving torque to the spindle 206 and hence to the centrifuge bowl 204 during operation. The drive motor 230 may be an electric motor. Alternatively, the drive motor 230 may be connected to the spindle 206 by transmission means. The transmission means may be in the form of a worm gear which comprises a pinion and an element connected to the spindle 206 in order to receive driving torque. The transmission means may alternatively take the form of a propeller shaft, drive belts or the like, and the drive motor may alternatively be connected directly to the spindle 206.

The centrifuge bowl 204 is supported by the spindle 206, which is rotatably arranged in a frame 220 around the vertical axis of rotation X in a bottom bearing 222 and a top bearing 221. The stationary frame 220 surrounds centrifuge rotor comprising the bowl 204. The centrifuge bowl also comprises a stack of separation discs 209, which enable separation of the liquid into different fractions.

Also shown in Fig. 6 is an inlet pipe 210 extending into the centrifuge bowl 204 axially from the top. After separation has taken place within the centrifuge bowl 204, separated heavy liquid phase is discharged through a stationary outlet pipe 216, whereas separated light liquid phase is discharged through a stationary outlet pipe 217. The high-speed separator may alternatively be provided with an inlet at the bottom wherein the in-feed occurs via a hollow spindle. The separator may be hermetically sealed.

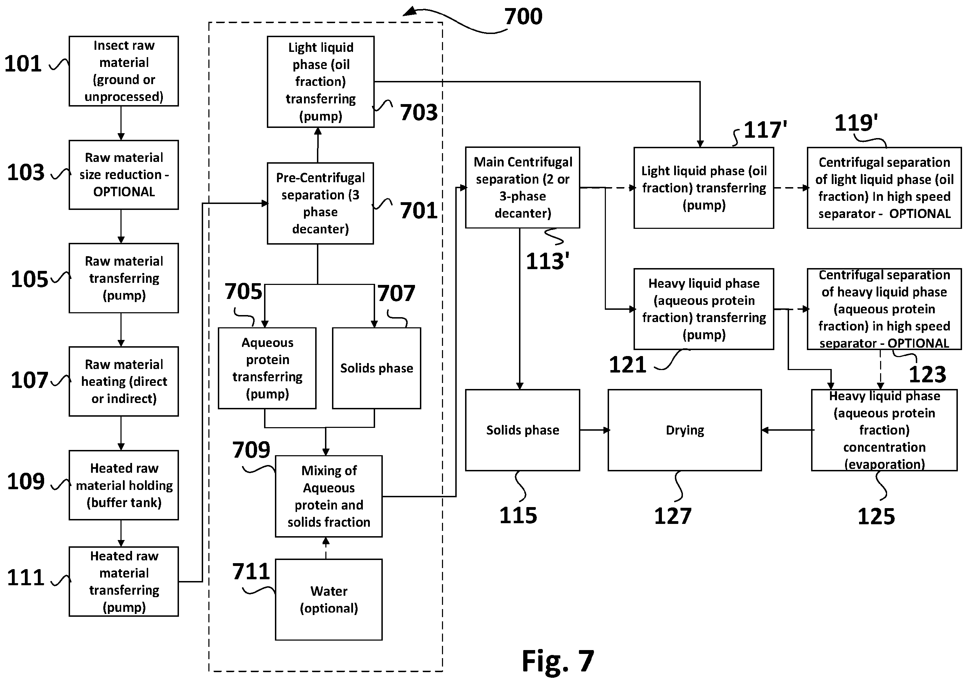

Reference is now made to Fig. 7, in which a first variant 700 of the second embodiment of the present method is further illustrated. The steps 101-111 were already described in connection with Fig. 2 above, and reference is made to the description thereof. However, the first variant 700 does not include the water and/or part of the separated heavy liquid phase addition step 110. However, the first variant 700 may include this step 110, whereby further reduced lipid content in the final protein meal product may be achieved.

As illustrated in the embodiment of Fig. 7, the heated insect-based raw material is pumped in step 111 to a pre-centrifugal separation step 701 upstream of the main centrifugal separation step 113'. In the pre-centrifugal separation step 701, the heated insect-based raw material is separated into three phases a light liquid phase comprising the lipid fraction, a heavy liquid phase comprising the aqueous protein fraction and a solids phase. The light liquid phase is in a step 703 transferred by means of pumping to a further optional centrifugal separation step 119, as described in connection with Fig. 2. A heavy liquid phase comprising an aqueous protein-containing fraction is transferred in a step 705 by means of pumping to a mixing step 709. The solid phase is also transferred in a step 707 to the mixing step 709. The pre-centrifugal separation step 701 is performed with a 3-phase decanter. According to this first variant, the liquid heavy phase and the solid phase are mixed in the step 709 to provide a slurry, which is transferred to and separated in the main centrifugal separation step 113' to provide individual streams of a heavy liquid phase and solid phase. Water may be optionally added to the slurry in a step 711.

In a similar manner as in connection with Fig. 2, the light liquid phase obtained in the pre-centrifugal separation step 701 may be transferred by pumping in step 703 to an optional separation step 119' in a high-speed separator. If a 3-phase decanter is used in the main centrifugal separation step 113', a light liquid phase is separated from the slurry. It may then be combined with the light liquid phase from the pre-centrifugal step 701 and transferred by pumping in a step 117' to a further, optional, second centrifugal separation step 119' to remove any remaining solids and/or aqueous heavy phase. The centrifugal separator in the step 119' may be a high-speed separator and can be of a purifier type. However, a 2-phase decanter may be used in the main centrifugal separation 113', whereby only the heavy liquid phase and the solids are separated from the mixed slurry.

As already explained above, in all embodiments 100, 700 and 900, as shown in Fig. 2, 7 and 9, the solids phase obtained in the step 115 is further transferred to a drying step 127. The heavy liquid phase containing the aqueous protein fraction is transferred by pumping in the step 121 to an evaporation step 125, in which water in the heavy liquid phase containing the aqueous protein fraction is evaporated. The evaporated heavy liquid phase containing the aqueous protein fraction is then transferred to the drying step 127 together with the solid phase. The heavy liquid phase may be transferred by pumping in step 121 to a further, optional, centrifugal separation step 123 with a high-speed separator to remove any remaining solids or light liquid phase, before the heavy liquid phase is evaporated in the step 125.

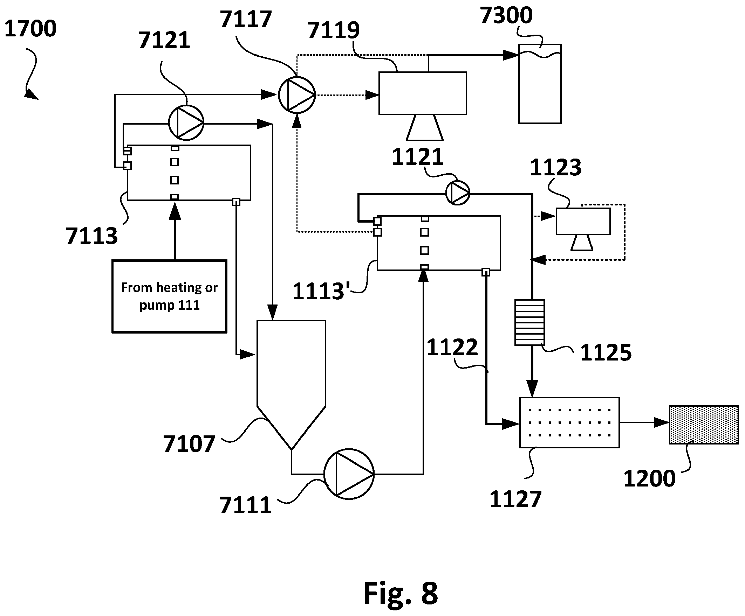

Reference is made to Fig. 8, which shows schematically a system 1700 suitable for the method downstream of the heating step 111. The system components upstream and including step 111 are described in connection with Fig. 3 and reference is made thereto. The system of Fig. 8 may include the components 1110, 1010, 1020, 1030 and 1040 adapted for water and/or part of the separated heavy liquid phase addition and described in connection with Fig. 3, but these components need not be included.

The system comprises a pre-centrifugal separator 7113, which is a 3-phase decanter and separates the incoming heated insect-based raw material to three individual streams of a light liquid phase, a heavy liquid phase and a solid phase. The light liquid phase is pumped by means of a transfer pump 7117 either to a tank 7300 or to a further high-speed centrifugal separator 7119, in which it is purified before it enters the tank 7300.

The heavy liquid phase is pumped by means of a transfer pump 7121 to a mixer unit 7107, in which it is mixed with the solid phase obtained in the pre-centrifugal decanter separator 7113. Water may be added to the slurry in the mixer unit 7107 to facilitate pumping of the slurry to the main centrifugal separator 1113', which may be a 2-phase or 3 phase decanter. In case a 2-phase decanter is used, the slurry from the mixer unit 7107 is separated into a liquid heavy phase, which may be pumped by means of a pump 1121 to an evaporator 1125 directly or via a high-speed centrifugal separator 1123, which purifies the heavy liquid phase before entering the evaporator 1125. The liquid heavy phase is then transferred to a dryer together with the solids 1122 to provide the low-fat protein meal. In case a 3-phase decanter is used, also the light liquid phase is separated in the decanter 1113' and pumped further to the tank 7300, optionally via the centrifugal high-speed separator 7119.

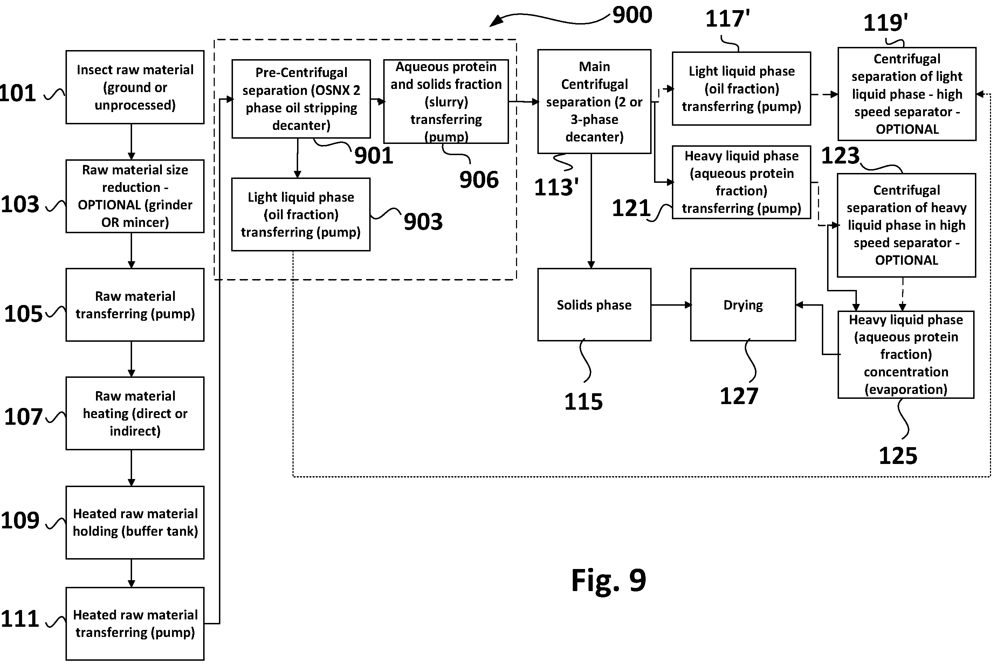

Reference is now made to Fig. 9, in which a second variant 900 of the second embodiment of the present method is further illustrated. The steps 101-111 were already described above, and reference is made to the description thereof. However, the second variant 900 does not need to include the water and/or part of the separated heavy liquid phase addition step 110. However, the second variant 900 may include this step 110, whereby further reduced lipid content in the final product may be achieved.

As illustrated in the embodiment of Fig. 9, the heated insect-based raw material is pumped in the step 111 to a pre-centrifugal separation step 901 upstream of the main centrifugal separation step 113'. In the pre-centrifugal separation step 901, the heated insect-based raw material is separated into a light liquid phase 903, i.e. a lipid fraction, and a slurry 909 comprising a heavy liquid phase, i.e. an aqueous protein-containing fraction, and a solid phase. The pre-centrifugal separation step 901 is performed with an oil-stripping 2-phase decanter, which is configured for extracting a greater part of the extractable oil and/or fat originally contained in the insect-based raw material. The slurry 906 is then supplied to the main centrifugal separation step 113'.

In each of the first and second variants 700, 900 comprising the pre-centrifugal separation step 701 or 901 of the second embodiment of the method, the main centrifugal separation step 113' is similar to the main centrifugal separation step of the first embodiment illustrated in Fig. 2. However, since the light liquid phase, i.e. the oil, is already to a great extent separated in the pre-centrifugal separation step 701 or 901, it is possible to use a 2-phase decanter instead of a 3-phase decanter as the main centrifugal separator in the step 113'. The 2-phase decanter is configured to separate the heavy liquid phase and the solid phase to individual streams. It is thus optional to further separate the remaining light liquid phase to an individual stream in the main centrifugal separation step 113', wherein a 3-phase decanter would be required.

The light liquid phase obtained in the pre-centrifugal separation step 901 may be transferred by pumping in step 903 to an optional separation step 119' in a high-speed separator. If a 3-phase decanter is used in the main centrifugal separation step 113', a light liquid phase is separated from the slurry. It may then be combined with the light liquid phase from the pre-centrifugal step 901 and transferred by pumping in a step 117' to the further, optional, second centrifugal separation step 119' to remove any remaining solids and/or aqueous heavy phase. The centrifugal separator in the step 119' may be a high-speed separator and can be of a purifier type. However, a 2-phase decanter may be used in the main centrifugal separation 113', whereby only the heavy liquid phase and the solids are separated. The heavy liquid phase and the solids phase are treated in the steps 121, 123, 125, 127 and 115 as described above in connection with Fig. 2 and 7, and reference is made to the description thereof.

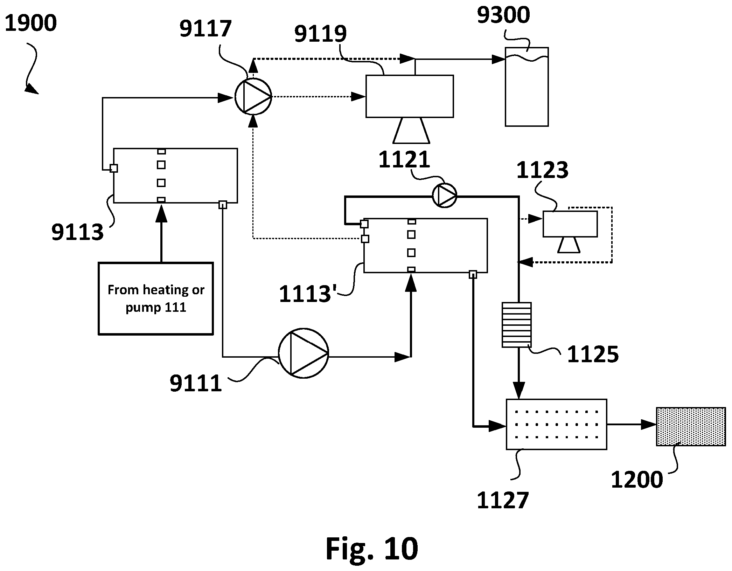

Fig. 10 shows a system 1900 suitable for performing the second variant 900 described above. The system differs from the system described in connection with Fig. 8 in that the pre-centrifugal separator is a 2-phase oil-stripping decanter 9113. The heated insect-based material is thus separated to light liquid phase, i.e. oil, and a slurry comprising the heavy liquid phase and the solids. The slurry is then transferred to the main centrifugal separator 1113', which may be a 2- or 3-phase decanter as described above. The oil is transferred by means of a transfer pump 9117 to a tank 9300, optionally via a centrifugal high-speed separator 9119. If a 3-phase separator is used as the main centrifugal separator 1113', the light liquid phase obtained is combined with the oil obtained from the oil stripping decanter 9113 upstream of the centrifugal high-speed separator 9119 or the tank 9300. The steps for the treatment of the heavy liquid phase and the solids downstream of the main centrifugal separator 1113' are the same as described in connection with Fig. 8, and reference is made to the description thereof.

### Examples

In the following examples, a standard, prior art, wet rendering process without water addition is compared with the processes according to the present disclosure, in which water and/or recirculated water from the downstream process steps is added to the feed or in which a pre-centrifugal separation step is used to separate the light liquid phase. In all examples, the comparison is based on a mass balance calculation with a feed of 1000 kg/h of insect based raw material at a temperature of 5-25°C. Table 1 shows the lipids, dry solids and water contents in the feed.

**Table 1**

| Insects 1000 kg/h | % by weight | kg/weight |
|---|---|---|
| Lipids | 9.5 | 95 |
| Dry solids | 21.5 | 215 |
| Water | 69.0 | 690 |

### Example 1, Comparative Example: Prior art method

The feed is heated with steam at a rate of 156 kg steam/h to a temperature of 80-98°C. The content of lipids, dry solids and water in the feed is after heating the same as shown in Table 1. Downstream of the heating, the feed is separated in a 3-phase decanter centrifuge into a light liquid phase (lipids or oily phase), heavy liquid phase (aqueous protein phase) and solids phase. The feed rate and the contents in separated phases are shown in Table 2-4 below.

**Table 2**

| Lipids phase, oil 59 kg/h | % by weight | kg/weight |
|---|---|---|
| Lipids | 96 | 57 |
| Dry solids | 2.0 | 1,18 |
| Water | 2.0 | 1 |

**Table 3**

| Heavy liquid phase, effluent 536 kg/h | % by weight | kg/weight |
|---|---|---|
| Lipids | 1.5 | 8 |
| Dry solids | 7.8 | 42 |
| Water | 90.7 | 486 |

**Table 4**

| Solids phase, solids 405 kg/h | % by weight | kg/weight |
|---|---|---|
| Lipids | 7.5 | 30 |
| Dry solids | 42.5 | 172 |
| Water | 50.0 | 202 |

The light liquid or lipids phase from the decanter is further separated in a high-speed separator to remove remaining water. During the separation, 6.0 kg/h water is injected to the separator. Table 5 below shows contents after water removal in the high-speed separator:

**Table 5**

| Lipids 57 kg/h | % by weight | kg/weight |
|---|---|---|
| Lipids | 99.4 | 56 |
| Dry solids | 0.10 | 0 |
| Water | 0.50 | 0 |

The heavy, aqueous liquid phase from the decanter is evaporated in an evaporator to concentrate the aqueous phase. Table 6 below shows contents in the concentrate after evaporation.

**Table 6**

| Heavy liquid phase, concentrate 125 kg/h | % by weight | kg/weight |
|---|---|---|
| Lipids | 6.5 | 8 |
| Dry solids | 33.5 | 42 |
| Water | 60.0 | 75 |

The solids phase from the decanter and the concentrate of the heavy liquid phase are dried in a dryer to provide a dry protein-containing meal. Table 7 shows the contents in the dry meal after drying.

**Table 7**

| Total solids 275 kg/h | % by weight | kg/weight |
|---|---|---|
| Lipids | 14.04 | 39 |
| Dry solids | 78.0 | 215 |
| Water | 8.0 | 22 |

### Example 2: Method according to the first embodiment of the present invention with water addition

In a similar manner as in the prior art method, the feed is heated with steam at a rate of 156 kg steam/h to a temperature of 80-98°C. However, according to the present method, water or aqueous heavy liquid phase is added to the feed upstream of the heating step. In the present example 300kg/h / 1000kg/h water is added, i.e. 0.3 kg water / 1 kg insects. The content of lipids, dry solids and water in the feed is after heating is shown in Table 8.

**Table 8**

| Insects 1313 kg/h | % by weight | kg/weight |
|---|---|---|
| Lipids | 7.4 | 98 |
| Dry solids | 17.6 | 231 |
| Water | 75.0 | 985 |

As seen more lipids are dissolved into the liquid phase.

Downstream of the heating, the feed is separated in a 3-phase decanter centrifuge into a light liquid phase (lipids or oily phase), heavy liquid phase (aqueous protein phase) and solids phase. The feed rate and the contents in separated phases are shown in Table 9-11 below.

**Table 9**

| Lipids phase, oil 72 kg/h | % by weight | kg/weight |
|---|---|---|
| Lipids | 96 | 69 |
| Dry solids | 2.0 | 1.44 |
| Water | 2.0 | 1 |

**Table 10**

| Heavy liquid phase, effluent 831 kg/h | % by weight | kg/weight |
|---|---|---|
| Lipids | 0.9 | 8 |
| Dry solids | 5.4 | 45 |
| Water | 93.7 | 779 |

**Table 11**

| Solids phase, solids 410 kg/h | % by weight | kg/weight |
|---|---|---|
| Lipids | 5.0 | 20 |
| Dry solids | 45.0 | 184 |
| Water | 50.0 | 205 |

The light liquid or lipids phase from the decanter is further separated in a high-speed separator to remove remaining water. During the separation, 7.3 kg/h water is injected to the separator. Table 12 below shows contents after water removal in the high-speed separator:

**Table 12**

| Lipids 69 kg/h | % by weight | kg/weight |
|---|---|---|
| Lipids | 99.4 | 69 |
| Dry solids | 0.10 | 0 |
| Water | 0.50 | 0 |

The heavy, aqueous liquid phase from the decanter is evaporated in an evaporator to concentrate the aqueous phase. Table 13 below shows contents in the concentrate after evaporation.

**Table 13**

| Heavy liquid phase, concentrate 83 kg/h | % by weight | kg/weight |
|---|---|---|
| Lipids | 6.31 | 5 |
| Dry solids | 33.3 | 29 |
| Water | 58.4 | 48 |

The solids phase from the decanter and the concentrate of the heavy liquid phase are dried in a dryer to provide a dry protein-containing meal. Table 14 shows the contents in the dry meal after drying.

**Table 14**

| Total solids 216 kg/h | % by weight | kg/weight |
|---|---|---|
| Lipids | 9.91 | 26 |
| Dry solids | 82.1 | 215 |
| Water | 8.0 | 21 |

It can be seen that by the method according to the present invention, the lipid content in the dried meal is reduced from 14.04% (39 kg) to 9.91% (26 kg). It can also be seen that the yield of the lipids is increased from 56 kg to 69 kg with the same raw material feed rate of insects, i.e. 1000 kg/h.

### Example 3, Embodiment 2, first variant with pre-centrifugal separation and recombination of heavy liquid phase and solids

In a similar manner as in the prior art method, the feed is heated with steam at a rate of 156 kg steam/h to a temperature of 80-98°C. However, according to the method in this example, a pre-centrifugal separation step is performed with a 3-phase decanter. The heavy phase and the solids are combined together upstream of the main centrifugal separation step, which is also performed in a 3-phase decanter. The content of lipids, dry solids and water in the feed is after heating is shown in Table 8.

**Table 15**

| Insects 1156 kg/h | % by weight | kg/weight |
|---|---|---|
| Lipids | 8.2 | 95 |
| Dry solids | 18.6 | 215 |
| Water | 73.2 | 846 |

Downstream of the heating, the feed is separated in pre-centrifugal 3-phase decanter centrifuge into a light liquid phase (lipids or oily phase), heavy liquid phase (aqueous protein phase) and solids phase. The heavy liquid phase and the solids phase are then combined to a slurry. The feed rate and the contents in separated phases are shown in Table 16-19 below.

**Table 16**

| Lipids phase, oil 72 kg/h | % by weight | kg/weight |
|---|---|---|
| Lipids | 96 | 69 |
| Dry solids | 2.0 | 1.43 |
| Water | 2.0 | 1 |

**Table 17**

| Heavy liquid phase, effluent 702 kg/h | % by weight | kg/weight |
|---|---|---|
| Lipids | 1 | 7 |
| Dry solids | 5.9 | 42 |
| Water | 93.1 | 653 |

**Table 18**

| Solids phase, solids 382 kg/h | % by weight | kg/weight |
|---|---|---|
| Lipids | 5.0 | 19 |
| Dry solids | 45.0 | 172 |
| Water | 50.0 | 191 |

**Table 19**

| Slurry 1084 kg/h | % by weight | kg/weight |
|---|---|---|
| Lipids | 2.4 | 26 |
| Dry solids | 19.7 | 214 |
| Water | 77.9 | 844 |

The slurry obtained by mixing the heavy liquid phase and the solids phase is further separated in a main centrifugal separator, which is a 3-phase decanter. The feed rate and the contents in separated phases are shown in Table 20-22 below.

**Table 20**

| Lipids phase, oil 10 kg/h | % by weight | kg/weight |
|---|---|---|
| Lipids | 96 | 10 |
| Dry solids | 2.0 | 0.20 |
| Water | 2.0 | 0 |

**Table 21**

| Heavy liquid phase, effluent 710 kg/h | % by weight | kg/weight |
|---|---|---|
| Lipids | 0.8 | 6 |
| Dry solids | 6.0 | 43 |
| Water | 93.2 | 662 |

**Table 22**

| Solids phase, solids 364 kg/h | % by weight | kg/weight |
|---|---|---|
| Lipids | 3.0 | 11 |
| Dry solids | 47.0 | 171 |
| Water | 50.0 | 182 |

The light liquid or lipids phase from the decanter is further separated in a high-speed separator to remove remaining water. During the separation, 7.3 kg/h water is injected to the separator. Table 23 below shows contents after water removal in the high-speed separator:

**Table 23**

| Lipids 79 kg/h | % by weight | kg/weight |
|---|---|---|
| Lipids | 99.4 | 78 |
| Dry solids | 0.10 | 0 |
| Water | 0.50 | 0 |

The heavy, aqueous liquid phase from the decanter is evaporated in an evaporator to concentrate the aqueous phase. Table 24 below shows contents in the concentrate after evaporation.

**Table 24**

| Heavy liquid phase, concentrate 120 kg/h | % by weight | kg/weight |
|---|---|---|
| Lipids | 4.62 | 6 |
| Dry solids | 35.4 | 43 |
| Water | 60.0 | 72 |

The solids phase from the decanter and the concentrate of the heavy liquid phase are dried in a dryer to provide a dry protein-containing meal. Table 25 shows the contents in the dry meal after drying.

**Table 25**

| Total solids 252 kg/h | % by weight | kg/weight |
|---|---|---|
| Lipids | 6.69 | 17 |
| Dry solids | 85.3 | 215 |
| Water | 8.0 | 20 |

It can be seen that by the method according to the present invention, which includes a pre-centrifugal separation step, the lipid content in the dried meal is reduced from 14.04% (39 kg) to 6.69% (17 kg) compared to the prior art method. It can also be seen that the yield of the lipids is increased from 56 kg to 78 kg compared to the prior art method and with the same raw material feed rate of insects, i.e. 1000 kg/h.

### Example 4, Embodiment 2, second variant with pre-centrifugal separation with an oil-stripping decanter

In a similar manner as in the prior art method, the feed is heated with steam at a rate of 156 kg steam/h to a temperature of 80-98°C. However, according to the method in this example, a pre-centrifugal separation step is performed with an oil-stripping decanter. The slurry phase from the oil stripping decanter comprises combined heavy liquid phase and solids and the solids are combined together upstream of the main centrifugal separation step, which is also performed in a 3-phase decanter. The content of lipids, dry solids and water in the feed is after heating is shown in Table 26.

**Table 26**

| Insects 1156 kg/h | % by weight | kg/weight |
|---|---|---|
| Lipids | 8.2 | 95 |
| Dry solids | 18.6 | 215 |
| Water | 73.2 | 846 |

Downstream of the heating, the feed is separated in a pre-centrifugal separator, which is an oil-stripping 2-phase decanter centrifuge, into a light liquid phase (lipids or oily phase), and a slurry comprising the heavy liquid phase (aqueous protein phase) and solids phase. The feed rate and the contents in separated phases are shown in Table 27-28 below.

**Table 27**

| Lipids phase, oil 75 kg/h | % by weight | kg/weight |
|---|---|---|
| Lipids | 98.5 | 74 |
| Dry solids | 0.5 | 0.38 |
| Water | 1.0 | 1 |

**Table 28**

| Slurry 1081 kg/h | % by weight | kg/weight |
|---|---|---|
| Lipids | 2.0 | 21 |
| Dry solids | 19.9 | 215 |
| Water | 78.2 | 845 |

The slurry is kept at a temperature of 80-98°C and is further separated in a main centrifugal separator, which is a 3-phase decanter. The feed rate and the contents in separated phases are shown in Table 29-31 below.

**Table 29**

| Lipids phase, oil 6 kg/h | % by weight | kg/weight |
|---|---|---|
| Lipids | 96 | 6 |
| Dry solids | 2.0 | 0.13 |
| Water | 2.0 | 0 |

**Table 30**

| Heavy liquid phase, effluent 686 kg/h | % by weight | kg/weight |
|---|---|---|
| Lipids | 0.8 | 5 |
| Dry solids | 4.4 | 30 |
| Water | 94.9 | 651 |

**Table 31**

| Solids phase, solids 389 kg/h | % by weight | kg/weight |
|---|---|---|
| Lipids | 2.5 | 10 |
| Dry solids | 47.5 | 185 |
| Water | 50.0 | 194 |

The light liquid or lipids phase from the decanter is further separated in a high-speed separator to remove remaining water. During the separation, 7.6 kg/h water is injected to the separator. Table 32 below shows contents after water removal in the high-speed separator:

**Table 32**

| Lipids 80 kg/h | % by weight | kg/weight |
|---|---|---|
| Lipids | 99.4 | 80 |
| Dry solids | 0.10 | 0 |
| Water | 0.50 | 0 |

The heavy, aqueous liquid phase from the decanter is evaporated in an evaporator to concentrate the aqueous phase. Table 33 below shows contents in the concentrate after evaporation.

**Table 33**

| Heavy liquid phase, concentrate 88 kg/h | % by weight | kg/weight |
|---|---|---|
| Lipids | 6.00 | 5 |
| Dry solids | 34.0 | 30 |
| Water | 60.0 | 53 |

The solids phase from the decanter and the concentrate of the heavy liquid phase are dried in a dryer to provide a dry protein-containing meal. Table 34 shows the contents in the dry meal after drying.

**Table 34**

| Total solids 250 kg/h | % by weight | kg/weight |
|---|---|---|
| Lipids | 6.15 | 17 |
| Dry solids | 85.3 | 215 |
| Water | 8.0 | 20 |

It can be seen that by the method according to the present invention, which includes a pre-centrifugal separation step with an oil-stripping decanter, the lipid content in the dried meal is reduced from 14.04% (39 kg) to 6.15% (17 kg) compared to the prior art method.

It can also be seen that the yield of the lipids is increased from 56 kg to 80 kg compared to the prior art method and with the same raw material feed rate of insects, i.e. 1000 kg/h.

The invention is not limited to the embodiments described above and shown on the drawings, but can be supplemented and modified in any manner within the scope of the invention as defined by the enclosed claims.

## Claims

1. Method for providing an insect-based, low-fat protein meal from an insect-based raw material, the method comprising the steps of:
- providing fresh insect-based raw material, which is optionally reduced in size,
- pumping the insect-based raw material to a heating step (107), in which the insect-based raw material is heated to a temperature from 75 to 100°C,
- subjecting the heated insect-based raw material to a main centrifugal separation step (113), in which a light liquid phase (117) comprising a lipid fraction, a heavy liquid phase (121) comprising an aqueous protein-containing fraction and a solid phase (115) are separated to individual streams,
- subjecting the solid phase and at least part of the heavy liquid phase, which is optionally concentrated, to a drying step to provide the insect-based, low-fat protein meal, **characterized in that**
at least part of the separated heavy liquid phase is added to the provided insect-based raw material in an amount from 0.01 to 5 kg separated heavy liquid phase / 1 kg of insect-based raw material upstream of the main separation step.

2. Method for providing an insect-based, low-fat protein meal from an insect-based raw material, the method comprising the steps of:
- providing fresh insect-based raw material, which is optionally reduced in size,
- pumping the insect-based raw material to a heating step (107), in which the insect-based raw material is heated to a temperature from 75 to 100°C,
- subjecting the heated insect-based raw material to a pre-centrifugal separation step (701; 901), in which a light liquid phase (703; 903) comprising a lipid fraction is separated to an individual stream from a heavy liquid phase comprising an aqueous protein-containing fraction and a solid phase,
- subjecting the separated heavy liquid phase and solid phase provided as a slurry (709; 906) to a main centrifugal separation step downstream of the pre-centrifugal separation step, in which at least the heavy liquid phase and solid phase are separated to individual streams,
- subjecting the solid phase and at least part of the heavy liquid phase, which is optionally concentrated, to a drying step to provide the insect-based, low-fat protein meal, **characterized in that**
- the light liquid phase (703), heavy liquid phase (705) and the solid phase (707) are separated to individual streams in the pre-centrifugal separation step, and
wherein the heavy liquid phase and the solid phase are re-combined together to provide a slurry (709) upstream of the main centrifugal separation step (113'), in which at least the heavy liquid phase and the solid phase are separated to individual streams, or wherein the light liquid phase (903) is separated to an individual stream and the heavy liquid phase and the solid phase are separated to a slurry (906) in the pre-centrifugal separation step (901) by using a 2-phase oil stripping decanter (9113) in which the heavy liquid phase and solids are discharged as a uniform slurry through a small end hub of the decanter, while a relative clean oil is discharged via a large end hub of the decanter, the decanter being configured for extracting a greater part of the extractable oil and/or fat originally contained in the insect-based raw material.

3. Method according to claim 2, wherein water and/or part of the separated heavy liquid phase is added to the provided insect-based raw material in an amount from 0.01 to 5 kg water and/or separated heavy liquid phase / 1 kg of insect-based raw material upstream of the pre-centrifugal separation step.

4. Method according to any one of the preceding claims, wherein at least a portion of the separated heavy liquid phase is subjected to an additional step of centrifugal separation and/or evaporation downstream of the main separation step to provide a concentrated protein fraction.

5. Method according to any one of the preceding claims, wherein at least a portion of the separated light liquid phase is subjected to an additional step of high-speed centrifugal separation downstream of the pre- and/or main centrifugal separation steps to provide a purified insect oil.

6. Method according to any one of the preceding claims, wherein the provided insect-based raw material is reduced in size at least partly during pumping to the heating step and/or by means of squashing, cutting or milling upstream of the heating step.

7. Method according to any one of the preceding claims, wherein the insect-based raw material is heated to a temperature from 80 to 98°C.

8. Method according to any one of the preceding claims, wherein the solid phase and at least part of the heavy liquid phase, which is optionally concentrated, are dried together or separately to provide the insect-based, protein-containing meal.

9. Method according to any one of the preceding claims, wherein the heated insect-based material is supplied to a mixing tank (1109) for mixing upstream of the separation steps.

10. System for providing a low-fat insect protein meal from an insect-based raw material comprising:
- a receptacle (1101) configured to receive a fresh insect-based raw material, which is optionally reduced in size,
- a first pumping arrangement (1105) for feeding the insect-based raw material to a heating arrangement (1107), in which the insect-based raw material is heated to a temperature from 75 to 100°C,
- downstream of the heating arrangement, a second pumping arrangement (1111) configured to feed the heated insect-based raw material to a main centrifugal separator (1113), in which a light liquid phase comprising a lipid fraction, a heavy liquid phase comprising an aqueous protein-containing fraction and a solid phase are separated to individual streams,
- downstream of the main centrifugal separator, a dryer (1127) configured to dry the solid phase and at least part of the heavy liquid phase comprising the aqueous protein-containing fraction,
- upstream of the dryer and downstream of the main centrifugal separator, optionally an evaporator (1125) configured to provide a concentrated aqueous protein-containing fraction, and
**characterized in that** the system comprises a recirculating line (1020) for recirculating at least part of the separated heavy liquid phase to the insect-based raw material upstream or downstream of the heating arrangement (1107) and upstream of the main centrifugal separator (1113), in an amount from 0.01 to 5 kg separated heavy liquid phase per 1 kg of insect-based raw material.

11. System for providing a low-fat insect protein meal from an insect-based raw material comprising:
- a receptacle (1101) configured to receive a fresh insect-based raw material, which is optionally reduced in size,
- a first pumping arrangement (1105) for feeding the insect-based raw material to a heating arrangement (1107), in which the insect-based raw material is heated to a temperature from 75 to 100°C,
- downstream of the heating arrangement (1107), a second pumping arrangement (1111) configured to feed the heated insect-based raw material to a pre-centrifugal separator (7113; 9113), in which a light liquid phase comprising a lipid fraction is separated to an individual stream from a heavy liquid phase comprising an aqueous protein-containing fraction and a solid phase,
- downstream of the pre-centrifugal separator, a main centrifugal separator (1113') is arranged, in which the heavy liquid phase and solid phase are separated to individual streams
- downstream of the main centrifugal separator, a dryer (1127) configured to dry the solid phase and at least part of the heavy liquid phase comprising the aqueous protein-containing fraction,
- upstream of the dryer and downstream of the main centrifugal separator, optionally an evaporator (1125) configured to provide a concentrated aqueous protein-containing fraction, and **characterized in that**
the pre-centrifugal separator is a 2-phase oil-stripping decanter in which the heavy liquid phase and solids are discharged as a uniform slurry through a small end hub of the decanter, while a relative clean oil is discharged via a large end hub of the decanter, the decanter being configured for extracting a greater part of the extractable oil and/or fat originally contained in the insect-based raw material, or a 3-phase decanter and a mixer unit (7107) in which the separated heavy liquid phase and the solid phase are re-combined together.

12. System according to any of claims 10 or 11, wherein the main centrifugal separator is a 2-phase decanter.

13. System according to any of claims 10 or 11, wherein the main centrifugal separator is a 3-phase decanter.

14. System according to any one of claims 10-13 comprising downstream of the main centrifugal separator a high-speed centrifugal separator adapted for purifying the light liquid phase and/or a high-speed centrifugal separator adapted for purifying the heavy liquid phase.

15. System according to any one of the preceding claims 10-14, wherein the system comprises a mixing tank (1109) downstream of the heating arrangement and upstream of the main centrifugal or pre-centrifugal separator.

## Patentansprüche

1. Verfahren zum Bereitstellen einer fettarmen Proteinmahlzeit auf Insektenbasis aus einem Rohstoff auf Insektenbasis, wobei das Verfahren die folgenden Schritte umfasst:
- Bereitstellen von frischem Rohstoff auf Insektenbasis, der optional zerkleinert wird,
- Pumpen des Rohstoffs auf Insektenbasis zu einem Erhitzungsschritt (107), bei dem der Rohstoff auf Insektenbasis auf eine Temperatur von 75 bis 100 °C erhitzt wird,
- Unterziehen des erhitzten Rohstoffs auf Insektenbasis einem Hauptzentrifugaltrennungsschritt (113), in dem eine leichte flüssige Phase (117), die eine Lipidfraktion umfasst, eine schwere flüssige Phase (121), die eine wässrige proteinhaltige Fraktion umfasst, und eine feste Phase (115) in einzelne Ströme getrennt werden,
- Unterziehen der festen Phase und mindestens eines Teils der schweren flüssigen Phase, die optional konzentriert ist, einem Trocknungsschritt, um das fettarme Proteinmehl auf Insektenbasis bereitzustellen, **dadurch gekennzeichnet, dass**
mindestens ein Teil der getrennten schweren flüssigen Phase dem bereitgestellten Rohstoff auf Insektenbasis in einer Menge von 0,01 bis 5 kg getrennter schwerer flüssiger Phase / 1 kg Rohstoff auf Insektenbasis vor dem Haupttrennungsschritt hinzugegeben wird.

2. Verfahren zum Bereitstellen einer fettarmen Proteinmahlzeit auf Insektenbasis aus einem Rohstoff auf Insektenbasis, wobei das Verfahren die folgenden Schritte umfasst:
- Bereitstellen von frischem Rohstoff auf Insektenbasis, der optional zerkleinert wird,
- Pumpen des Rohstoffs auf Insektenbasis zu einem Erhitzungsschritt (107), bei dem der Rohstoff auf Insektenbasis auf eine Temperatur von 75 bis 100 °C erhitzt wird,
- Unterziehen des erhitzten Rohstoffs auf Insektenbasis einem Vorzentrifugaltrennungsschritt (701; 901), in dem eine leichte flüssige Phase (703; 903), die eine Lipidfraktion umfasst, von einer schweren flüssigen Phase, die eine wässrige proteinhaltige Fraktion und eine feste Phase umfasst, in einen einzelnen Strom getrennt wird,
- Unterziehen der getrennten schweren flüssigen Phase und der festen Phase, die als Aufschlämmung (709; 906) bereitgestellt ist, einem Hauptzentrifugaltrennungsschritt stromabwärts von dem Vorzentrifugaltrennungsschritt, bei dem mindestens die schwere flüssige Phase und die feste Phase in einzelne Ströme getrennt werden,
- Unterziehen der festen Phase und mindestens eines Teils der schweren flüssigen Phase, die optional konzentriert ist, einem Trocknungsschritt, um das fettarme Proteinmehl auf Insektenbasis bereitzustellen, **dadurch gekennzeichnet, dass**
- die leichte flüssige Phase (703), die schwere flüssige Phase (705) und die feste Phase (707) in dem Vorzentrifugaltrennungsschritt in einzelne Ströme getrennt werden, und wobei die schwere flüssige Phase und die feste Phase wieder miteinander kombiniert werden, um eine Aufschlämmung (709) stromaufwärts von dem Hauptzentrifugaltrennungsschritt (113') bereitzustellen, in dem mindestens die schwere flüssige Phase und die feste Phase in einzelne Ströme getrennt werden, oder wobei die leichte flüssige Phase (903) zu einem einzelnen Strom getrennt wird und die schwere flüssige Phase und die feste Phase zu einer Aufschlämmung (906) in dem Vorzentrifugaltrennungsschritt (901) unter Verwendung eines 2-Phasen-Ölabstreif-Dekanters (9113) getrennt werden, in dem die schwere flüssige Phase und die Feststoffe als eine einheitliche Aufschlämmung durch eine kleine Endnabe des Dekanters abgegeben werden, während ein relativ sauberes Öl über eine große Endnabe des Dekanters abgegeben wird, wobei der Dekanter dazu konfiguriert ist, einen größeren Teil des extrahierbaren Öls und/oder Fetts zu extrahieren, die ursprünglich in dem Rohstoff auf Insektenbasis enthalten waren.

3. Verfahren nach Anspruch 2, wobei Wasser und/oder Teil der getrennten schweren flüssigen Phase zu dem bereitgestellten Rohstoff auf Insektenbasis in einer Menge von 0,01 bis 5 kg Wasser und/oder getrennter schwerer flüssiger Phase / 1 kg Rohstoff auf Insektenbasis stromaufwärts von dem Vorzentrifugaltrennungsschritt hinzugegeben wird.

4. Verfahren nach einem der vorstehenden Ansprüche, wobei mindestens ein Abschnitt der getrennten schweren flüssigen Phase einem zusätzlichen Schritt der zentrifugalen Trennung und/oder Verdampfung stromabwärts von dem Haupttrennungsschritt unterzogen wird, um eine konzentrierte Proteinfraktion bereitzustellen.

5. Verfahren nach einem der vorstehenden Ansprüche, wobei mindestens ein Abschnitt der getrennten leichten flüssigen Phase einem zusätzlichen Schritt der Zentrifugaltrennung mit Hochgeschwindigkeit stromabwärts von dem Vor- und/oder Hauptzentrifugaltrennungsschritt unterzogen wird, um ein gereinigtes Insektenöl bereitzustellen.

6. Verfahren nach einem der vorstehenden Ansprüche, wobei der bereitgestellte Rohstoff auf Insektenbasis mindestens teilweise während des Pumpens zu dem Erhitzungsschritt und/oder durch Quetschen, Schneiden oder Mahlen stromaufwärts von dem Erhitzungsschritt zerkleinert wird.

7. Verfahren nach einem der vorstehenden Ansprüche, wobei der Rohstoff auf Insektenbasis auf eine Temperatur von 80 bis 98 °C erhitzt wird.

8. Verfahren nach einem der vorstehenden Ansprüche, wobei die feste Phase und mindestens ein Teil der schweren flüssigen Phase, die optional konzentriert ist, zusammen oder getrennt getrocknet werden, um das proteinhaltige Mehl auf Insektenbasis bereitzustellen.

9. Verfahren nach einem der vorstehenden Ansprüche, wobei das erhitzte Material auf Insektenbasis einem Mischtank (1109) zum Mischen stromaufwärts der Trennungsschritte zugeführt wird.

10. System zum Bereitstellen eines fettarmen Insektenproteinmehls aus einem Rohstoff auf Insektenbasis, umfassend:
- einen Behälter (1101), der dazu konfiguriert ist, einen frischen Rohstoff auf Insektenbasis aufzunehmen, der optional zerkleinert ist,
- eine erste Pumpanordnung (1105) zum Zuführen des Rohstoffs auf Insektenbasis zu einer Heizanordnung (1107), in der der Rohstoff auf Insektenbasis auf eine Temperatur von 75 bis 100 °C erhitzt wird,
- stromabwärts von der Heizanordnung, eine zweite Pumpanordnung (1111), die dazu konfiguriert ist, den erhitzten Rohstoff auf Insektenbasis einem Hauptzentrifugalabscheider (1113) zuzuführen, in dem eine leichte flüssige Phase, die eine Lipidfraktion umfasst, eine schwere flüssige Phase, die eine wässrige proteinhaltige Fraktion umfasst, und eine feste Phase in einzelne Ströme getrennt werden,
- stromabwärts von dem Hauptzentrifugalabscheider, einen Trockner (1127), der dazu konfiguriert ist, die feste Phase und mindestens einen Teil der schweren flüssigen Phase, die die wässrige, proteinhaltige Fraktion umfasst, zu trocknen,
- stromaufwärts von dem Trockner und stromabwärts von dem Hauptzentrifugalabscheider, optional einen Verdampfer (1125), der dazu konfiguriert ist, eine konzentrierte wässrige proteinhaltige Fraktion bereitzustellen, und
**dadurch gekennzeichnet, dass** das System eine Rezirkulationsleitung (1020) zum Rezirkulieren mindestens eines Teils der getrennten schweren flüssigen Phase zu dem Rohstoff auf Insektenbasis stromaufwärts oder stromabwärts von der Heizanordnung (1107) und stromaufwärts von dem Hauptzentrifugalabscheider (1113) in einer Menge von 0,01 bis 5 kg getrennter schwerer flüssiger Phase pro 1 kg des Rohstoffs auf Insektenbasis umfasst.

11. System zum Bereitstellen eines fettarmen Insektenproteinmehls aus einem Rohstoff auf Insektenbasis, umfassend:
- einen Behälter (1101), der dazu konfiguriert ist, einen frischen Rohstoff auf Insektenbasis aufzunehmen, der optional zerkleinert ist,
- eine erste Pumpanordnung (1105) zum Zuführen des Rohstoffs auf Insektenbasis zu einer Heizanordnung (1107), in der der Rohstoff auf Insektenbasis auf eine Temperatur von 75 bis 100 °C erhitzt wird,
- stromabwärts von der Heizanordnung (1107), eine zweite Pumpanordnung (1111), die dazu konfiguriert ist, den erhitzten Rohstoff auf Insektenbasis einem Vorzentrifugalabscheider (7113; 9113) zuzuführen, in dem eine leichte flüssige Phase, die eine Lipidfraktion umfasst, von einer schweren flüssigen Phase, die eine wässrige proteinhaltige Fraktion und eine feste Phase umfasst, in einen einzelnen Strom getrennt wird,
- stromabwärts von dem Vorzentrifugalabscheider ein Hauptzentrifugalabscheider (1113') angeordnet ist, in dem die schwere flüssige Phase und die feste Phase in einzelne Ströme getrennt werden
- stromabwärts von dem Hauptzentrifugalabscheider, einen Trockner (1127), der dazu konfiguriert ist, die feste Phase und mindestens einen Teil der schweren flüssigen Phase, die die wässrige, proteinhaltige Fraktion umfasst, zu trocknen,
- stromaufwärts von dem Trockner und stromabwärts von dem Hauptzentrifugalabscheider, optional einen Verdampfer (1125), der dazu konfiguriert ist, eine konzentrierte wässrige proteinhaltige Fraktion bereitzustellen, und **dadurch gekennzeichnet, dass**
der Vorzentrifugalabscheider ein 2-Phasen-Ölabstreif-Dekanter ist, in dem die schwere flüssige Phase und die Feststoffe als eine einheitliche Aufschlämmung durch eine kleine Endnabe des Dekanters abgegeben werden, während ein relativ sauberes Öl über eine große Endnabe des Dekanters abgegeben wird, wobei der Dekanter dazu konfiguriert ist, einen größeren Teil des extrahierbaren Öls und/oder Fetts zu extrahieren, die ursprünglich in dem Rohstoff auf Insektenbasis enthalten waren, oder ein 3-Phasen-Dekanter und eine Mischeinheit (7107), in der die getrennte schwere flüssige Phase und die feste Phase wieder miteinander kombiniert werden.

12. System nach einem der Ansprüche 10 oder 11, wobei der Hauptzentrifugalabscheider ein 2-Phasen-Dekanter ist.

13. System nach einem der Ansprüche 10 oder 11, wobei der Hauptzentrifugalabscheider ein 3-Phasen-Dekanter ist.

14. System nach einem der Ansprüche 10 bis 13, umfassend stromabwärts von dem Hauptzentrifugalabscheider einen Zentrifugalabscheider mit Hochgeschwindigkeit, der zum Reinigen der leichten flüssigen Phase angepasst ist, und/oder einen Zentrifugalabscheider mit Hochgeschwindigkeit, der zum Reinigen der schweren flüssigen Phase angepasst ist.

15. System nach einem der vorstehenden Ansprüche 10 bis 14, wobei das System einen Mischtank (1109) stromabwärts von der Heizanordnung und stromaufwärts von dem Hauptzentrifugal- oder Vorzentrifugalabscheider umfasst.

## Revendications

1. Procédé de fourniture d'une nourriture protéinée à faible teneur en graisse, à base d'insectes, à partir de matière première à base d'insecte, le procédé comprenant les étapes consistant à :
- fournir de la matière première fraîche à base d'insectes, qui est facultativement réduite en taille,
- pomper la matière première à base d'insecte vers une étape de chauffage (107), dans laquelle la matière première à base d'insecte est chauffée à une température de 75 à 100 °C,
- soumettre la matière première à base d'insecte chauffée à une étape de séparation centrifuge principale (113), dans laquelle une phase liquide légère (117) comprenant une fraction lipide, une phase liquide lourde (121) comprenant une fraction aqueuse contenant des protéines et une phase solide (115) sont séparées en courants individuels,
- soumettre la phase solide et au moins une partie de la phase liquide lourde, qui est facultativement concentrée, à une étape de chauffage pour fournir la nourriture protéinée à faible teneur en graisse, à base d'insecte, **caractérisé en ce que**
au moins une partie de la phase liquide lourde séparée est ajoutée à la matière première à base d'insecte fournie en une quantité de 0,01 à 5 kg de phase liquide lourde séparée / 1 kg de matière première à base d'insecte en amont de l'étape de séparation principale.

2. Procédé de fourniture d'une nourriture protéinée à faible teneur en graisses, à base d'insecte, à partir d'une matière première à base d'insecte, le procédé comprenant les étapes consistant à :
- fournir une matière première fraîche à base d'insecte, qui est facultativement réduite en taille,
- pomper la matière première à base d'insecte vers une étape de chauffage (107), dans laquelle la matière première à base d'insecte est chauffée à une température de 75 à 100 °C,
- soumettre la matière première à base d'insecte chauffée à une étape de séparation pré-centrifuge (701 ; 901), dans laquelle une phase liquide légère (703 ; 903) comprenant une fraction lipide est séparée en un courant individuel d'une phase liquide lourde comprenant une fraction aqueuse contenant des protéines et une phase solide,
- soumettre la phase liquide lourde séparée et la phase solide fournie sous forme de bouillie (709 ; 906) à une étape de séparation centrifuge principale en aval de l'étape de séparation pré-centrifuge, dans laquelle au moins la phase liquide lourde et la phase solide sont séparées en courants individuels,
- soumettre la phase solide et au moins une partie de la phase liquide lourde, qui est facultativement concentrée, à une étape de séchage pour fournir la nourriture protéinée à faible teneur en graisse, à base d'insecte, **caractérisé en ce que**
- la phase liquide légère (703), la phase liquide lourde (705) et la phase solide (707) sont séparées en courants individuels dans l'étape de séparation pré-centrifuge, et dans lequel la phase liquide lourde et la phase solide sont recombinées ensemble pour fournir une bouillie (709) en amont de l'étape de séparation centrifuge principale (113'), dans laquelle au moins la phase liquide lourde et la phase solide sont séparées en courants individuels, ou dans lequel la phase liquide légère (903) est séparée en un courant individuel et la phase liquide lourde et la phase solide sont séparées en une bouillie (906) dans l'étape de séparation pré-centrifuge (901) en utilisant un décanteur de décoffrage d'huile à 2 phases (9113) dans lequel la phase liquide lourde et les solides sont déchargés sous forme d'une bouillie uniforme à travers un petit moyeu d'extrémité du décanteur, tandis qu'une huile relativement propre est déchargée par le biais d'un grand moyeu d'extrémité du décanteur, le décanteur étant configuré pour extraire une plus grande partie de l'huile et/ou de la graisse extractibles contenues à l'origine dans la matière première à base d'insecte.

3. Procédé selon la revendication 2, dans lequel l'eau et/ou une partie de la phase liquide lourde séparée est ajoutée à la matière première à base d'insecte fournie en une quantité de 0,01 à 5 kg d'eau et/ou de phase liquide lourde séparée /1 kg de matière première à base d'insecte en amont de l'étape de séparation pré-centrifuge.

4. Procédé selon l'une quelconque des revendications précédentes, dans lequel au moins une partie de la phase liquide lourde séparée est soumise à une étape supplémentaire de séparation centrifuge et/ou d'évaporation en aval de l'étape de séparation principale pour fournir une fraction de protéine concentrée.

5. Procédé selon l'une quelconque des revendications précédentes, dans lequel au moins une partie de la phase liquide légère séparée est soumise à une étape supplémentaire de séparation centrifuge à grande vitesse en aval des étapes de séparation pré-centrifuge et/ou de séparation principale pour fournir une huile d'insecte purifiée.

6. Procédé selon l'une quelconque des revendications précédentes, dans lequel la matière première à base d'insecte fournie est réduite en taille au moins partiellement pendant le pompage vers l'étape de chauffage et/ou au moyen d'un écrasement, d'une découpe ou d'un broyage en amont de l'étape de chauffage.

7. Procédé selon l'une quelconque des revendications précédentes, dans lequel la matière première à base d'insecte est chauffée à une température de 80 à 98 °C.

8. Procédé selon l'une quelconque des revendications précédentes, dans lequel la phase solide et au moins une partie de la phase liquide lourde, qui est facultativement concentrée, sont séchées ensemble ou séparément pour fournir la nourriture contenant des protéines, à base d'insectes.

9. Procédé selon l'une quelconque des revendications précédentes, dans lequel la matière à base d'insecte chauffée est fournie à un réservoir de mélange (1109) pour être mélangée en amont des étapes de séparation.

10. Système de fourniture d'une nourriture protéinée à faible teneur en graisse à base d'insecte à partir d'une matière première à base d'insecte comprenant :
- un réceptacle (1101) configuré pour recevoir une matière première fraîche à base d'insecte, qui est facultativement réduite en taille,
- un premier agencement de pompage (1105) pour alimenter la matière première à base d'insecte vers un agencement de chauffage (1107), dans lequel la matière première à base d'insecte est chauffée à une température de 75 à 100 °C ;
- en aval de l'agencement de chauffage, un second agencement de pompage (1111) configuré pour alimenter la matière première à base d'insecte chauffée vers un séparateur centrifuge principal (1113), dans lequel une phase liquide légère comprenant une fraction lipide, une phase liquide lourde comprenant une fraction aqueuse contenant des protéines et une phase solide sont séparées en courants individuels,
- en aval du séparateur centrifuge principal, un sécheur (1127) configuré pour sécher la phase solide et au moins une partie de la phase liquide lourde comprenant la fraction aqueuse contenant des protéines,
- en amont du sécheur et en aval du séparateur centrifuge principal, facultativement un évaporateur (1125) configuré pour fournir une fraction aqueuse concentrée contenant des protéines, et
**caractérisé en ce que** le système comprend une ligne de recirculation (1020) pour faire recirculer au moins une partie de la phase liquide lourde séparée vers la matière première à base d'insecte en amont ou en aval de l'agencement de chauffage (1107) et en amont du séparateur centrifuge principal (1113), en une quantité de 0,01 à 5 kg de phase liquide lourde séparée par 1 kg de matière première à base d'insecte.

11. Système pour fournir une nourriture protéinée à faible teneur en graisse et à base d'insecte à partir d'une matière première à base d'insecte comprenant :
- un réceptacle (1101) configuré pour recevoir une matière première fraîche à base d'insecte, qui est facultativement réduite en taille,
- un premier agencement de pompage (1105) pour alimenter la matière première à base d'insecte vers un agencement de chauffage (1107), dans lequel la matière première à base d'insecte est chauffée à une température de 75 à 100 °C,
- en aval de l'agencement de chauffage (1107), un second agencement de pompage (1111) configuré pour alimenter la matière première à base d'insecte chauffée vers un séparateur pré-centrifuge (7113 ; 9113), dans lequel une phase liquide légère comprenant une fraction lipide est séparée en un courant individuel depuis une phase liquide lourde comprenant une fraction aqueuse contenant des protéines et une phase solide,
- en aval du séparateur pré-centrifuge, un séparateur centrifuge principal (1113') est agencé, dans lequel la phase liquide lourde et la phase solide sont séparées en courants individuels,
- en aval du séparateur centrifuge principal, un sécheur (1127) configuré pour sécher la phase solide et au moins une partie de la phase liquide lourde comprenant la fraction aqueuse contenant des protéines,
- en amont du sécheur et en aval du séparateur centrifuge principal, facultativement un évaporateur (1125) configuré pour fournir une fraction aqueuse concentrée contenant des protéines, et **caractérisé en ce que**
le séparateur pré-centrifuge est un décanteur de décoffrage d'huile en 2 phases dans lequel la phase liquide lourde et les solides sont déchargés sous forme d'une bouillie uniforme à travers un petit moyeu d'extrémité du décanteur, tandis qu'une huile relativement propre est déchargée par le biais d'un grand moyeu d'extrémité du décanteur, le décanteur étant configuré pour extraire une plus grande partie de l'huile et/ou de la graisse extractibles contenues à l'origine dans la matière première à base d'insecte, ou un décanteur à 3 phases et une unité de mélangeur (7107) dans laquelle la phase liquide lourde et la phase solide séparées sont recombinées ensemble.

12. Système selon l'une quelconque des revendications 10 ou 11, dans lequel le séparateur centrifuge principal est un décanteur à 2 phases.

13. Système selon l'une quelconque des revendications 10 ou 11, dans lequel le séparateur centrifuge principal est un décanteur à 3 phases.

14. Système selon l'une quelconque des revendications 10 à 13, comprenant en aval du séparateur centrifuge principal, un séparateur centrifuge à grande vitesse adapté pour purifier la phase liquide légère et/ou un séparateur centrifuge à grande vitesse adapté pour purifier la phase liquide lourde.

15. Système selon l'une quelconque des revendications 10 à 14, dans lequel le système comprend un réservoir de mélange (1109) en aval de l'agencement de chauffage et en amont du séparateur centrifuge principal ou pré-centrifuge.
